# EUROPÄISCHE PATENTSCHRIFT

(11) **EP 2 303 567 B1**
(45) Veröffentlichungstag und Bekanntmachung des Hinweises auf die Patenterteilung: **05.12.2012**
(21) Anmeldenummer: 09779988.6
(22) Anmeldetag: 29.06.2009
(51) Int. Cl.: B62D 21/10, B62D 29/00, B32B 3/06, B62D 27/02, F16B 5/00, F16B 11/00

(54) **FAHRZEUG-TRAGSTRUKTUR UND DEREN HERSTELLUNG**
VEHICLE LOAD-BEARING STRUCTURE AND THE PRODUCTION THEREOF
STRUCTURE PORTEUSE DE VÉHICULE ET SA FABRICATION

(30) Priorität: 07.07.2008 CH 10532008
(43) Veröffentlichungstag der Anmeldung: 06.04.2011
(73) Patentinhaber: Hochschule Für Technik Rapperswil, 8640 Rapperswil (CH)
(72) Erfinder: HENNE, Markus, 8200 Schaffhausen (CH)
(74) Vertreter: OK pat AG
(86) Internationale Anmeldenummer: PCT/EP2009/058078
(87) Internationale Veröffentlichungsnummer: WO 2010/003842

(56) Entgegenhaltungen:
- EP-A- 0 523 831
- WO-A-2004/041625
- US-A1- 2004 065 041

## Beschreibung

Die vorliegende Erfindung betrifft ein Verfahren zur Herstellung einer Fahrzeug-Tragstruktur sowie eine entsprechende Fahrzeug-Tragstruktur, die mit diesem Verfahren hergestellt oder herstellbar ist.

Dieses Verfahren zur Herstellung einer Fahrzeug-Tragstruktur umfasst das Bereitstellen eines ersten plattenförmigen Bauteils mit einem oder mehreren Verbindungszapfen, die an zumindest einer Umfangskante des Bauteils angeordnet sind, das Bereitstellen eines zweiten plattenförmigen Bauteils mit einer oder mehreren Aufnahmeöffnung(en) zur Aufnahme von Verbindungszapfen des ersten plattenförmigen Bauteils, das Einbringen zumindest eines Verbindungszapfens des ersten Bauteils in jeweils eine Aufnahmeöffnung des zweiten Bauteils und das Ausrichten der beiden Bauteile zueinander derart, dass diese Bauteile bestimmungsgemäss zueinander ausgerichtet sind. Entsprechend umfasst die Fahrzeug-Tragstruktur zumindest ein erstes plattenförmiges Bauteil mit einem oder mehreren, an zumindest einer Umfangskante des Bauteils angeordneten Verbindungszapfen und zumindest ein zweites plattenförmiges Bauteil mit einer oder mehreren Aufnahmeöffnung(en) zur Aufnahme von Verbindungszapfen des ersten plattenförmigen Bauteils. Dabei ist zumindest ein Verbindungszapfen des ersten Bauteils in jeweils eine Aufnahmeöffnung des zweiten Bauteils einschiebbar ausgebildet. Zudem sind die ersten und zweiten Bauteile bestimmungsgemäss zueinander ausrichtbar ausgebildet.

Im Zuge eines zunehmenden Umweltbewusstseins und steigender Treibstoffpreise sind in den letzten Jahren, ausgehend vom bisher ungebrochenen Bedürfnis nach individueller Mobilität, kleine kompakte Strassenfahrzeuge wieder salonfähig geworden. Die bisher eher als Exoten wahrgenommenen Elektro-Kleinfahrzeuge profitieren von dieser Entwicklung und stossen inzwischen auf ein wachsendes Interesse. Gerade in diesem Segment ist der Markterfolg jedoch im hohen Masse davon abhängig, ob es gelingt, Fahrzeuge mit praxisgerechter Reichweite zu einem im Vergleich mit anderen mit Verbrennungsmotor angetriebenen Kleinfahrzeugen interessanten Preis anzubieten. Im Lichte der bisher geringen Stückzahlen stellt dies eine grosse Herausforderung dar. Die Reichweite eines Elektrofahrzeugs hängt ganz massgeblich vom Verhältnis der mitgeführten Batteriekapazität zum Fahrzeuggewicht ab, welches wiederum wesentlich durch das Gewicht der Fahrzeugstruktur beeinflusst wird. Deren Gewicht wiederum ist stark abhängig von der konstruktiven Ausgestaltung und den verwendeten Materialien, wobei eine materialseitige Gewichtsoptimierung praktisch zwangsläufig zu einer Vervielfachung der Materialkosten führt (z.B. Kohlefaser oder Titan anstelle von Stahl oder Aluminium) und viele der Fertigungsverfahren, welche eine Gewicht einsparende Konstruktionsweise ermöglichen würden, auf Grund hoher Werkzeugkosten für eine Kleinserienfertigung ungeeignet sind. Dies führt im Resultat dazu, dass die heute in Kleinserie produzierten Elektro-Leichtfahrzeuge entweder infolge eines zu hohen Gewichts eine geringe Reichweite haben oder aber bei akzeptabler Reichweite viel teuer sind, und ist wohl der eigentliche Grund dafür, dass derartige Fahrzeuge bis heute lediglich ein Nischendasein fristen. Es besteht somit ein Bedarf für eine alternative Fahrzeug-Tragstruktur bzw. für eine solche Fahrzeug-Karosseriestruktur, welche die zuvor erwähnten Nachteile des Standes der Technik nicht aufweist oder zumindest teilweise vermeidet.

Aus der Offenlegungsschrift DE 43 30 559 A1 ist ein in Modulbauweise hergestelltes Kraftfahrzeug bekannt, das aus einer Fahrgastzelle und zumindest einem Frontmodul ausgebildet ist, wobei zwei Verbindungsarten zwischen der Fahrgastzelle und dem Frontmodul verwendet werden. Zum einen hat das Frontmodul ein sich über die gesamte Breite des Fahrzeugbodens erstreckendes Bodenteil, das horizontal sich erstreckende und nach oben verlaufende Klebekanäle aufweist. Diese Klebekanäle verlaufen so, dass beim Zusammenfahren der Fahrgastzelle und des Frontmoduls zwischen der Einfahrrichtung und dem Verlauf der Klebekanäle ein Winkel von mindestens 25° besteht. Zum anderen sind an den für die Krafteinleitung kritischen Stellen am Modul und an der Fahrgastzelle bei der Montage ineinander greifende Knotenelemente vorgesehen. Diese Knotenelemente sind als schwalbenschwanzförmige Aufnahmenut und als schwalbenschwanzförmige, in diese Aufnahmenut eingreifende Führungsfeder ausgebildet, die aneinander gleitend verriegelt werden und damit die Einfahrrichtung für die Klebekanäle bestimmen.

Aus der Offenlegungsschrift DE 102 60 531 A1 ist ein Verfahren und eine Vorrichtung zur Erstellung einer Abstützung zwischen einem Karosseriebauteil und wenigstens einem benachbarten Montageteil an Kraftfahrzeugen bekannt. Dabei wird mittels Schäumen (Kunststoff- oder Metallschaum) eine feste oder lose Verbindung zwischen dem Karosserieteil und dem Montageteil 2 erzielt. Gemäss der Lehre von DE 102 60 531 A1 stellt der Schaum ein Element dar, das eine die Festigkeit der Karosseriestruktur steigernde Wirkung haben kann.

Aus der Patentanmeldung EP 0 523 831 A1 ist eine aus zusammengefügten flachen Platten bestehende Fahrzeugstruktur bekannt. Jede Platte umfasst zwei voneinander beabstandete, strukturelle Verkleidungen, die jeweils durch einen Kern aus expandiertem Material miteinander verbunden sind. Jede Verbindung zwischen zwei Platten umfasst eine Serie von aus einer ersten Platte ausgeschnittenen Überständen, die in entsprechende Aussparungen in der zweite Platte mittels eines Klebers eingeklebt sind.

Die aus dem Stand der Technik bekannten Fahrzeug-Karosseriestrukturen können die zuvor erwähnten Nachteile des Standes der Technik nur ansatzweise vermeiden oder sind zu kompliziert und damit zu teuer in der Herstellung.

Es stellt sich daher die Aufgabe, ein alternatives Verfahren zur Herstellung einer Fahrzeug-Tragstruktur bzw. einer Karosseriestruktur für ein Fahrzeug und eine Fahrzeug-Tragstruktur bzw. eine Karosseriestruktur für ein Fahrzeug zur Verfügung zu stellen, welche die zuvor erwähnten Nachteile des Standes der Technik nicht aufweisen oder zumindest grösstenteils vermeiden.

Diese Aufgabe wird durch das Verfahren und die Fahrzeug-Tragstruktur gemäss den unabhängigen Patentansprüchen gelöst. Weitere bevorzugte und erfindungsgemässe Merkmale ergeben sich aus den abhängigen Ansprüchen.

Demgemäss betrifft ein erster Aspekt der Erfindung ein Verfahren zur Herstellung einer bevorzugterweise tragenden Karosseriestruktur für Fahrzeuge, also einer Fahrzeug-Tragstruktur. Unter einer Fahrzeug-Tragstruktur wird hier sowohl ein Strukturbauteil verstanden, welches dazu bestimmt ist, einen tragenden Teil eines Fahrzeugchassis oder einer selbsttragenden Karosserie eines Fahrzeugs zu bilden, als auch ganze Fahrzeugchassis und selbsttragende Karosserien.

Gemäss dem erfindungsgemässen Verfahren wird ein erstes plattenförmiges Bauteil mit einem oder mehreren gleichartigen oder unterschiedlichen Verbindungszapfen angeordnet an zumindest einer Umfangskante des Bauteils bereitgestellt.

Des Weiteren wird ein zweites, mit dem ersten plattenförmigen Bauteil zu verbindendes plattenförmiges Bauteil bereitgestellt, welches Aufnahmeöffnungen aufweist zur Aufnahme der Verbindungszapfen des ersten plattenförmigen Bauteils. Dabei ist das zweite plattenförmige Bauteil derartig ausgebildet, dass bei bestimmungsgemäss zueinander ausgerichteten ersten und zweiten plattenförmigen Bauteilen, also in der Position, die die beiden Bauteile nach dem Miteinanderverbinden relativ zueinander einnehmen sollen, die Verbindungszapfen in die zugeordneten Aufnahmeöffnungen eintreten und zwischen den Verbindungszapfen und den Begrenzungen der Aufnahmeöffnungen jeweils ein vorzugsweise umlaufender Spalt verbleibt. Die jeweilige Aufnahmeöffnung ist also als umfangsmässig geschlossenes Durchgangs- oder Sackloch ausgebildet. Unter plattenförmigen Bauteilen werden hier Bauteile mit einer ausgeprägten flächigen Erstreckung bei gleichzeitig im Wesentlichen gleichmässige Dicke quer zur flächigen Erstreckung verstanden. Solche plattenförmigen Bauteile können eine ebene oder gewölbte flächige Erstreckung aufweisen.

Alternativ zu einem umlaufenden Spalt kann auch zwischen lediglich einem Teil der Seitenflächen eines Verbindungszapfens und der seitlichen Innenoberfläche der entsprechenden Aufnahmeöffnung ein Spalt vorgesehen werden. Dies hat den Vorteil, dass ein solcher als Richtzapfen ausgebildeter Verbindungszapfen beispielsweise mit einer oder zwei seiner Seitenflächen satt und exakt positioniert an die entsprechenden Innenoberflächen der Aussparung anstösst. Dadurch können die beiden zu verbindenden Bauteile exakt zueinander ausgerichtet werden. Dieses Ausrichten erfolgt bevorzugt in einer oder zwei Richtungen des Raumes, deshalb wird für derartige Richtzapfen bevorzugt ein Spalt zwischen zwei oder drei seitlichen Innenoberflächen der entsprechenden Aufnahmeöffnung vorgesehen. Soll eine gegenseitige Positionierung in allen drei Richtungen des Raumes erfolgen, so wird die Aufnahmeöffnung vorzugsweise als Sackloch ausgebildet und der Sacklochgrund zusätzlich mit der Stirnfläche des Richtzapfens beaufschlagt.

Zum Verbinden des ersten plattenförmigen Bauteils mit dem zweiten plattenförmigen Bauteil werden die Verbindungszapfen des ersten Bauteils in die Aufnahmeöffnungen des zweiten Bauteils eingebracht und die Bauteile bestimmungsgemäss zueinander ausgerichtet, so dass diese die Position zueinander einnehmen, welche sie im verbundenen Zustand relativ zueinander aufweisen sollen. Dabei oder anschliessend werden die Spalte zwischen den Verbindungszapfen und den Begrenzungen bzw. der seitlichen Innenoberflächen der entsprechenden Aufnahmeöffnungen mit einer verfestigbaren Füllmasse aufgefüllt. Diese Füllmasse hat bevorzugterweise gleichzeitig adhäsive Eigenschaften und wird dann beispielsweise als Dickschichtklebstoff bezeichnet. Anschliessend wird die Füllmasse bei bestimmungsgemäss zueinander ausgerichteten ersten und zweiten Bauteilen verfestigt.

Insbesondere für den Fall, dass eine nicht-adhäsive Füllmasse verwendet wird, ist es vorteilhaft, dass die Verbindungszapfen und die zugehörigen Aufnahmeöffnungen derartig ausgebildet sind, dass diese in Einbringungsrichtung der Verbindungszapfen gesehen hinterschnittene Konturen aufweisen. Somit entsteht nach dem Einbringen und Verfestigen der Füllmasse zumindest in einer Richtung entgegen der Einbringungsrichtung ein Formschluss zwischen dem jeweiligen Verbindungszapfen und den Begrenzungen der zugeordneten Aufnahmeöffnung. Dies ist beispielsweise dann gegeben, wenn der jeweilige Verbindungszapfen als Schwalbenschwanz ausgebildet ist und die zugehörige Aufnahmeöffnung eine entsprechende Gegenkontur aufweist. Alternativ dazu kann der Verbindungszapfen, wenn er z.B. als Richtzapfen ausgebildet ist, nur eine einseitig hinterschnittene Kontur, also z.B. einen "halben Schwalbenschwanz", aufweisen; die entsprechende Aufnahmeöffnung weist dann vorzugsweise zumindest gegenüber der geraden Seitenfläche des Richtzapfens eine ebenfalls gerade seitliche Innenoberfläche auf. In einer weiteren alternativen Ausführungsform weisen entweder der Verbindungszapfen oder die entsprechende Aufnahmeöffnung eine hinterschnittene Kontur, also beispielsweise eine Schwalbenschwanzform, auf.

Mit anderen Worten gesagt, handelt es sich also beim erfindungsgemässen Verfahren um ein Verfahren zum Verbinden plattenförmiger Bauteile zu einer Fahrzeug-Tragstruktur, bevorzugterweise zu einer tragenden Karosseriestruktur für Fahrzeuge. Wie unschwer zu erkennen ist, eignet sich ein derartiges Verfahren natürlich auch zur Verbindung plattenförmiger Bauteile zu anderen Zwecken als zur Bildung einer Karosseriestruktur für Fahrzeuge, z.B. auch zur Herstellung von Strukturen für den Flugzeugbau oder den Möbelbau. Allgemein eignet sich ein derartiges Verfahren zum Herstellen eines Fahrzeugs mit einer Tragstruktur oder mit einer tragenden Karosseriestruktur, wobei das Fahrzeug bevorzugt als ein Motorfahrzeug ausgebildet ist, das ausgewählt ist aus der Gruppe, welche durch Strassenfahrzeuge, Wasserfahrzeuge und Luftfahrzeuge gebildet wird. Weitere fahrbare oder transportierbare Behältnisse, wie Anhänger, Auflieger für Sattelschlepper oder Container können mit einer gleichartigen Tragstruktur oder tragenden Karosseriestruktur ausgebildet werden.

Durch das erfindungsgemässe Verfahren wird die wirtschaftliche Kleinserienherstellung von leichten und zugleich relativ steifen Karosseriestrukturteilen, Chassis und selbsttragenden Karosserien für Fahrzeuge aus plattenförmigen Halbzeugmaterialien möglich.

In einer bevorzugten Ausführungsform des Verfahrens werden erste und zweite plattenförmige Bauteile bereitgestellt, welche derartig dimensioniert sind, dass bei bestimmungsgemäss zueinander ausgerichteten ersten und zweiten plattenförmigen Bauteilen in den ausserhalb der Aufnahmeöffnungen liegenden Angrenzungsbereichen dieser Bauteile zueinander ein Zwischenraum zwischen diesen gebildet wird, welcher beim Verbinden der beiden plattenförmigen Bauteile ebenfalls mit der Füllmasse aufgefüllt wird. Dabei ist es bevorzugt, dass die bereitgestellten ersten und zweiten plattenförmigen Bauteile derartig dimensioniert sind, dass bei bestimmungsgemäss zueinander ausgerichteten Bauteilen, gegebenenfalls mit Ausnahme der Bereiche der Stirnflächen der Verbindungszapfen, in welchen es z.B. zwecks Positionierung gewünscht sein kann, dass die Bauteile direkt aneinander angrenzen, in allen Angrenzungsbereichen des ersten und zweiten Bauteils zueinander ein Zwischenraum zwischen diesen gebildet wird, welcher beim Verbinden der beiden plattenförmigen Bauteile ebenfalls mit der Füllmasse gefüllt wird. Hierdurch kann die Verbindung zwischen dem ersten und dem zweiten Bauteil weiter verbessert werden.

In einer weiteren bevorzugten Ausführungsform des Verfahrens wird eine dauerelastisch verfestigende Füllmasse verwendet, was den Vorteil ergibt, dass eine gewisse Relativbewegung der Bauteile zueinander unter Belastung durch die Verbindung zugelassen wird, ohne zu einer Zerstörung derselben zu führen, und dass eine Übertragung von Schwingungen und Vibrationen über das Strukturbauteil gedämpft wird. Bevorzugterweise kommen geschäumte oder ungeschäumte Dickschichtklebstoffe als dauerelastische Füllmasse zum Einsatz, bevorzugterweise auf Polyurethan-, Silikon- oder Kautschukbasis. Dabei weisen geschäumte Dickschichtklebstoffe, wie z.B. PUR-Schaum, den Vorteil auf, dass sie nach der Applikation in flüssigem Zustand durch das Treibmittel in die Spalte gedrückt werden und diese dann vollständig ausfüllen. PUR-Klebstoffe werden in der Automobil-Industrie für die Aufgaben Kleben und Dichten eingesetzt, wobei der Übergang der klebtechnischen Aufgaben zu den dichtenden Aufgaben fliessend ist. Angewendet werden sowohl Einkomponenten- als auch Zweikomponenten-Klebstoffe, bei denen die Aushärtemechanismen Feuchtigkeit, Wärme und Mehrkomponentensystem auch kombiniert vorkommen können. Verklebt und abgedichtet werden zum Beispiel Glasscheiben, Kunststoffanbauteile Front- und Heckmodule Dächer Türfalze Unterbodenverkleidungen.

In noch einer bevorzugten Ausführungsform des Verfahrens weisen die Spalte jeweils an ihrer schmalsten Stelle eine Mindestspaltweite von 1 mm auf. Hierdurch kann sichergestellt werden, dass das Füllmaterial in den Spalt eindringen kann. Weiter ist es bevorzugt, dass die Spalte jeweils an ihrer breitesten Stelle eine maximale Spaltweite von 5 mm nicht überschreiten, um einen Festigkeitsverlust und Probleme beim vollständigen Auffüllen der Spalte zu verhindern. Mit Vorteil werden die die plattenförmigen Bauteile unter einem Winkel von vorzugsweise 90° miteinander verbunden. Hierbei treten die Vorteile der Erfindung besonders deutlich zu Tage.

Alternativ zur Verwendung von geschäumten oder ungeschäumten Dickschichtklebstoffen als dauerelastische Füllmasse, wird bevorzugt ein Dünnschicht-Klebstoff, wie z.B. ein Epoxid-Harz verwendet. Epoxidharz-Klebstoffe (kurz: Epoxi-Klebstoffe) sind zweikomponentig aus Harz und Härter aufgebaut. Als Epoxid-harz werden Polymerbausteine verwendet, die am Ende sogenannte Epoxidgruppen tragen. Meist werden dazu die Reaktionsprodukte aus Bisphenol-A und Epichlorhydrin eingesetzt, die nach dem Vermischen mit dem Härter, der Amino-oder Mercaptogruppen enthält, einen stabilen Duroplasten bilden. Die Aushärtereaktion kann bei Raumtemperatur vorgenommen werden. Da der ausgehärtete Klebstoff eine sehr hohe Festigkeit besitzt, wendet man diese Klebstoff-Klasse häufig für strukturelle Verklebungen zum Beispiel im Fahrzeug- und Flugzeugbau an. Obwohl Risiken in Bezug auf Epoxi-Klebstoffe bekannt sind (Karzinogenität bzw. Sensibilisierungswirkung oder Allergenität einiger Epoxide; Mischungsverhältnis beider Komponenten muss eingehalten werden), haben Verklebungen mit Epoxid-Klebstoffen doch wesentliche Vorteile gegenüber den im Automobilbau häufig verwendeten Punktschweissungen. Bei Schweisspunkten werden Kräfte nur punktuell eingeleitet, während dies bei einer Verklebung grossflächig geschieht. Die Steifigkeit und Ermüdungsfestigkeit (Dauerschwingfestigkeit) einer geklebten Struktur ist dadurch deutlich höher als die einer vergleichbaren punktgeschweissten Struktur, so dass Expoxi-Klebstoffe in crashrelevanten Bereichen wie Motorträgern, Türen und Schwellern nicht nur eine hohe statische Festigkeit aufweisen, sondern auch unter hoher dynamischer Last ihre Festigkeit behalten. Epoxidharz-Klebstoffe haben bei kleinen Spaltmassen von 0.3 bis 0.5 mm die höchsten Festigkeiten. Um diese Spaltmasse in der Automobilindustrie zu gewährleisten, werden die Klebstoffe oft in Bördelfalzen eingesetzt. Zugaben von kleinen Glaskugeln im Durchmesserbereich von 0.3 bis 0.5 mm verhindern ein Unterschreiten der optimalen Klebschichtdicke.

Für die Verwendung von Dünnschicht-Klebstoffen wie Epoxid-Harz weisen die aufzufüllenden Spalte jeweils eine bevorzugte Mindestspaltweite von 0.1 mm und eine maximale Spaltweite von 0.5 mm auf. Epoxid-Harze ergeben eine bevorzugte, zähelastische und hochbelastbare Verbindung der plattenförmigen Bauteile. Sollte, beispielsweise für Reparaturzwecke, ein Teil der plattenförmigen Bauteile wieder voneinander getrennt werden, könnten Epoxidharz-Klebeverbindungen durch den Einsatz starker organischer Lösungsmittel, wie Aceton oder Chloroform, oder mittels starken Säuren, wie 3%-iger Ameisensäure oder 10%-iger Essigsäure, aufgelöst werden.

In noch einer weiteren bevorzugten Ausführungsform des Verfahrens werden die Aufnahmeöffnungen in dem zweiten plattenförmigen Bauteil als Sacklöcher ausgebildet. Im Falle einer Verbindung der plattenförmigen Bauteile unter einem Winkel von ca. 70° bis 110° und bei anspruchsgemässen zweiten plattenförmigen Bauteilen, welche Deckschichten aufweisen können, geschieht dies mit Vorteil derart, dass der Sacklochgrund von der entsprechenden Deckschicht gebildet wird. Die Füllmasse wird sodann vor dem Einbringen der Verbindungszapfen in die Aufnahmeöffnungen eingebracht, derart, dass sie beim Einbringen der Verbindungszapfen in die Aufnahmeöffnungen in die Spalte gedrängt wird. Hierdurch ergibt sich ein einfaches und sicheres Auffüllen der Spalte mit Füllmaterial. Im Falle einer Verbindung der plattenförmigen Bauteile unter einem Winkel von ca. 70° bis 110° oder auch von 90° ergibt sich zusätzlich der Vorteil, dass die Verbindung auf der Gegenseite des zweiten plattenförmigen Bauteils nicht sichtbar ist.

In noch einer weiteren bevorzugten Ausführungsform des Verfahrens wird ein Teil oder werden alle Verbindungszapfen des ersten plattenförmigen Bauteils und/oder die zugeordneten Aufnahmeöffnungen des zweiten plattenförmigen Bauteils mit einer, bezogen auf die Einbringungsrichtung der Verbindungszapfen, hinterschnittenen Kontur ausgebildet. Hierdurch ergibt sich der Vorteil, dass nach dem Verfestigen der Füllmasse zwischen dem jeweiligen Verbindungszapfen und den Begrenzungen der zugeordneten Aufnahmeöffnung durch die verfestigte Füllmasse zumindest in einer Richtung entgegen der Einbringungsrichtung ein Formschluss entsteht. Handelt es sich um eine Füllmasse, die zusätzlich auch adhäsive Wirkung hat, also um einen Dickschichtkleber, so entsteht zusätzlich ein Kraftschluss zwischen dem jeweiligen Verbindungszapfen und den Begrenzungen der zugeordneten Aufnahmeöffnung. Dabei ist es bevorzugt, wenn zumindest ein Teil der Verbindungszapfen des ersten plattenförmigen Bauteils als Schwalbenschwanzzapfen ausgebildet wird und/oder die zugeordneten Aufnahmeöffnungen des zweiten plattenförmigen Bauteils mit einer entsprechenden schwalbenschwanzförmigen Innenkontur ausgebildet werden. Dies ist von Vorteil, da eine Zugbeanspruchung der Verbindung nicht zu einer reinen Scherbeanspruchung innerhalb des verfestigten Füllmaterials bzw. Dickschichtklebers führt, sondern dabei gleichzeitig zu einer Druckbeanspruchung, wodurch eine deutlich festere Verbindung resultiert.

In noch einer weiteren bevorzugten Ausführungsform des Verfahrens wird zumindest eines der plattenförmigen Bauteile aus ebenen Halbzeugmaterialplatten, insbesondere aus Sandwichplattenmaterial oder Mehrschichtverbundplattenmaterial, mit bevorzugterweise kalt- oder warmverformbaren Deckschichten, ausgeschnitten. Beispiele für geeignete Deckschichtmaterialien sind Aluminium, Stahl, (faserverstärkte) Kunststoffe und Holz. Das Kernmaterial zwischen den Deckschichten sollte leicht, schub- und drucksteif in Dickenrichtung und vorzugsweise schlagzäh sein. Beispiele für geeignete Kerne sind Wabenkerne aus Aluminium, Stahl oder imprägniertem Papier, Schaumkerne aus Polyurethan PUR, Polyvinylchlorid PVC, Polystyrol PS oder thermoplastischen Kunststoffen (z.B. PET) oder auch Kerne aus Holz (z.B. Balsaholz oder verpresstes Schichtholz), aus Lochplatten oder aus Profil- oder Rohrelementen.

In noch einer bevorzugten Ausführungsform des Verfahrens wird zumindest eines der plattenförmigen Bauteile aus mehreren dimensionsmässig vorkonfektionierten, bevorzugterweise ebenen Schichtelementen gebildet, bevorzugterweise durch flächiges Verkleben der Schichtelemente miteinander zu einem Sandwichmaterial oder Mehrschichtverbundmaterial, z.B. wie zuvor angegeben, mit insbesondere kalt- oder warmverformbaren Deckschichten. Durch die beiden zuvor erwähnten Ausführungsformen ergibt sich der Vorteil, dass die plattenförmigen Bauteile bzw. die diese bildenden Materialschichten auf einfache Weise durch Ausschneiden aus Halbzeugmaterial bereitgestellt werden können, was einer wirtschaftlichen Kleinserienfertigung förderlich ist. Speziell bevorzugt wird, dass die aus dem Plattenmaterial des ersten Bauteils gebildeten Verbindungszapfen mit einem Verfahren ausgeschnitten werden, das aus der Gruppe ausgewählt ist, welche Fräsen, Laserschneiden, Wasserstrahlschneiden, Sägen und Ausstanzen umfasst. Dabei wird Fräsen stellvertretend als eine bevorzugte Bearbeitungsform der spanabhebenden Technologien genannt.

Als kaltverformbare Deckschichten werden hier Deckschichten angesehen, welche sich bei Raumtemperatur um mindestens 90° abkanten lassen, ohne dabei zu brechen oder einzureissen, wie z.B. Aluminiumblech. Als warmverformbare Deckschichten werden Deckschichten angesehen, welche sich nach einem Erwärmen auf Temperaturen über Raumtemperatur um mindestens 90° abkanten lassen, ohne dabei zu brechen oder einzureissen, wie z.B. eine PVC-Platte.

Dabei ist es bei den beiden zuvor beschriebenen Ausführungsformen des Verfahrens für den Fall, dass das erste plattenförmige Bauteil Deckschichten aufweist, bevorzugt, dass die Längsseiten und/oder die Stirnseiten der Verbindungszapfen des ersten plattenförmigen Bauteils vor dem Einbringen der Verbindungszapfen in die Aufnahmeöffnungen des zweiten plattenförmigen Bauteils zumindest teilweise mit einer Abdeckschicht versehen werden, welche mit den Deckschichten des ersten plattenförmigen Bauteils verbunden ist oder spätestens beim Verbinden vom ersten und zweiten Bauteil mit diesen Deckschichten verbunden wird. Hierdurch lässt sich, insbesondere bei ersten plattenförmigen Bauteilen, welche zwischen den beiden Deckschichten einen Kern aus weniger zugfestem Material aufweisen, die Verbindung zum zweiten plattenförmigen Bauteil deutlich verbessern.

Dabei ist es in einer ersten von zwei Varianten für den Fall, dass das erste plattenförmige Bauteil kalt- oder warmverformbare Deckschichten aufweist, bevorzugt, dass zur Bildung der Abdeckschichten Bereiche mindestens einer der Deckschichten des ersten plattenförmigen Bauteils durch Umbiegen auf die Längsseiten und/oder die Stirnseiten der Verbindungszapfen gelegt werden. Durch diese gemeinsame einstückige Ausbildung von Abdeckschicht und Deckschicht ergibt sich auf einfachste Weise eine sichere Verbindung zwischen Abdeckschicht und Deckschicht.

Weiter ist es in diesem Fall bevorzugt, dass zur Bildung der Abdeckschicht einer Stirnseite oder Längsseite eines Verbindungszapfens jeweils Bereiche beider Deckschichten durch Umbiegen auf die jeweilige Stirnseite oder Längsseite gelegt werden, bevorzugterweise derart, dass diese die Stirnseite oder Längsseite bis auf eine schmale Nut, welche im Bereich der Mitte der Plattendicke angeordnet ist, abdecken oder sich überlappen. Hierdurch ergibt sich der Vorteil, dass beide Deckschichten an der Bildung der Abdeckschicht beteiligt sind und sich eine besonders feste Verbindung ergibt. Im Falle der Bildung einer Nut zwischen den umgebogenen Bereichen im Bereich der Mitte der Plattendicke wird zudem das Eindringen von Füllmaterial in den Bereich zwischen den die Abdeckschicht bildenden umgebogenen Bereichen der Deckschichten und der Stirn- oder Längsseite des Verbindungszapfens begünstigt, wodurch zumindest bei Verwendung eines Dickschichtklebstoffes als Füllmaterial eine die Festigkeit der Verbindung weiter steigernde flächige Verklebung zwischen dem Kernmaterial und den Abdeckschichten erfolgen kann.

Weist dabei das erste plattenförmige Bauteil einen kompressiblen Kernbereich bzw. ein kompressibles Kernmaterial auf, was bevorzugt ist, so erfolgt das Umbiegen der Bereiche der Deckschichten mit Vorteil unter einem Zusammendrücken des Kernbereichs des Plattenmaterials im Bereich der Längsseiten und/oder Stirnseiten der Verbindungszapfen. Hierdurch wird es möglich, das erste plattenförmige Bauteil einfach aus einer entsprechenden Halbzeugmaterialplatte auszuschneiden und ohne weitere Nachbearbeitung die Abdeckschichten durch Umbiegen der dazu vorgesehenen Bereiche der Deckschichten zu bilden.

In der zweiten Variante ist es bevorzugt, dass zur Bildung der Abdeckschichten mit Vorteil C- oder U-förmige Profilabschnitte auf die Längsseiten und/oder Stirnseiten der Verbindungszapfen aufgesteckt werden, welche vor oder nach dem Einbringen der Verbindungszapfen in die Aufnahmeöffnungen mit den Deckschichten des ersten plattenförmigen Bauteils verbunden werden, insbesondere durch Nieten, Schweissen, Löten und/oder Verkleben. Bevorzugterweise sind die Profilabschnitte aus demselben oder einem ähnlichen Material wie die Deckschichten. Hierdurch wird es möglich, das erste plattenförmige Bauteil einfach aus einer entsprechenden Halbzeugmaterialplatte auszuschneiden und auch bei inkompressiblen oder schlecht kompressiblen Kernmaterialien auf einfache Weise eine Abdeckschicht zu bilden.

In noch einer weiteren bevorzugten Ausführungsform des Verfahrens ist es für den Fall, dass die plattenförmigen Bauteile unter einem Winkel von bevorzugterweise 90° miteinander verbunden werden und die Aufnahmeöffnungen als Sacklöcher ausgebildet werden, bevorzugt, dass zwischen der Stirnseite des jeweiligen Verbindungszapfens und dem Grund der zugeordneten sacklochförmigen Aufnahmeöffnung zusätzlich eine mechanische Verbindung hergestellt wird, und zwar bevorzugterweise durch Schrauben, Nageln oder Nieten. Dies erfolgt mit Vorteil derart, dass von der Aussenseite der den Sacklochgrund bildenden oder diesem nächstgelegenen Deckschicht Schrauben, Nägel, Nieten oder Bolzen in die Stirnfläche des in der Aufnahmeöffnung angeordneten Verbindungszapfens eingebracht werden. Hierdurch lässt sich die Position der beiden plattenförmigen Bauteile bereits vor dem Verfestigen der Füllmasse bzw. des Dickschichtklebstoffes sicher und ohne zusätzliche Hilfsmittel fixieren, was den Arbeitsablauf deutlich vereinfachen kann.

Ein zweiter Aspekt der Erfindung betrifft eine Karosseriestruktur für ein Fahrzeug, welche gemäss dem Verfahren nach dem ersten Aspekt der Erfindung hergestellt worden ist oder herstellbar ist. Der zweite Aspekt der Erfindung umfasst also sowohl die direkten Verfahrensprodukte aus dem Verfahren gemäss dem ersten Aspekt der Erfindung als auch strukturell identische, mit einem anderen Verfahren hergestellte Karosseriestrukturen.

Ein dritter Aspekt der Erfindung betrifft ein Fahrzeug mit einer bevorzugterweise tragenden Karosseriestruktur gemäss dem zweiten Aspekt der Erfindung. Der Begriff tragende Karosseriestruktur umfasst ausdrücklich auch ein tragendes Fahrzeugchassis und eine selbstragende Fahrzeugkarosserie. Die Erfindung betrifft also unter anderem ein Fahrzeug, dessen tragende Karosseriestruktur aus ebenen Plattenelementen, insbesondere ebenen Sandwichplattenelementen, aufgebaut ist, die über eine dickschichtverklebte Zapfenverbindung miteinander verbunden sind. Derartige Fahrzeuge sind leicht und gleichzeitig stabil und können kostengünstig herstellt werden.

In einer bevorzugten Ausführungsform des Fahrzeugs weist die tragende Karosseriestruktur Seitenwände auf, die jeweils von einem einzigen durchgehenden plattenförmigen Bauteil gebildet sind. Hierdurch lässt sich ein Fahrzeug mit einer extrem steifen und gleichzeitig sehr leichten Karosseriestruktur zur Verfügung stellen. In einer weiteren bevorzugten Ausführungsform ist das Fahrzeug ein Motorfahrzeug, insbesondere ein Elektrofahrzeug. Bei solchen Fahrzeugen treten die Vorteile der Erfindung deutlich zu Tage.

Dabei ist es für den Fall, dass das Fahrzeug ein Elektrofahrzeug ist, bevorzugt, dass es im Frontbereich ein im Betrieb rundum geschlossenes, thermisch isolierendes Batteriefach aufweist, welches bevorzugterweise aus Sandwichplatten gebildet ist, bevorzugterweise aus Sandwichplatten mit Deckschichten aus einer duktilen metallischen Legierung und einem schlagzähen Kernmaterial. Die Sandwichplatten sind bevorzugterweise gemäss dem Verfahren nach dem ersten Aspekt der Erfindung miteinander und/oder mit der tragenden Karosseriestruktur des Fahrzeugs verbunden. Hierdurch erhält man ein erfindungsgemässes Elektrofahrzeug, bei dem die Batteriebox zudem als Crashbox zur Absorption kinetischer Energie im Falle einer Frontalkollision dienen kann und zudem die Batterie thermisch kapselt, was im Falle eines Einsatzes des Fahrzeugs bei tiefen Temperaturen zu einer verbesserten Batterieleistung führen kann, insbesondere beim Einsatz von Li-Ion Batterien. Alternativ dazu wird das Batteriefach im Bereich der Sitze positioniert, was sich günstig auf die zentrale und tiefe Platzierung des Schwerpunkts eines entsprechenden Elektrofahrzeugs auswirkt. Auch dieses Batteriefach ist dank der Sandwichbauweise im Betrieb rundum geschlossen und thermisch isolierend ausgebildet.

Das Ausbilden einer stabilen Batteriebox aus Sandwichplatten mit Deckschichten hat zudem den erwünschten Effekt, dass eine stabile Schutzhülle die Batterie des Elektromobils oder einen beliebigen anderen Energiespeicher eines Motorfahrzeugs (z.B. eine H₂-Flasche für eine Brennstoffzelle oder einen Benzintank) vor mechanischen Einfüssen schützt.

Ein derartiges Elektrofahrzeug oder auch Hybridfahrzeug weist bevorzugt zumindest eine Crash-Struktur auf, die aus Sandwichplatten mit Deckschichten aus einer duktilen metallischen Legierung und einem schlagzähen Kernmaterial gebildet ist. Diese Crash-Strukturen können im Front- und/oder Heckbereich sowie an den Längsseiten der Karosseriestruktur eines Elektrofahrzeugs vorgesehen werden, wo sie einerseits die Stabilität der Fahrzeug-Karosserie erhöhen und andererseits als sogenannte "Knautschzone" wirken.

Weitere bevorzugte Ausführungsformen der Erfindung ergeben sich aus den abhängigen Ansprüchen und aus der nun folgenden Beschreibung, die den Umfang der vorliegenden Erfindung erläutert ohne diese einzuschränken, an Hand der Figuren. Dabei zeigt:
- Fig. 1: perspektivische Ansichten eines erfindungsgemässen Elektrofahrzeugs mit einer gemäss dem erfindungsgemässen Verfahren hergestellten Karosseriestruktur, wobei die Figur 1A eine erste Version und die Figur 1B eine zweite Version zeigt;
- Fig. 2: eine perspektivische Darstellung einer Zapfenverbindung der Karosseriestruktur des Elektrofahrzeugs;
- Fig. 3: eine perspektivische Darstellung einer Zapfenverbindung der Karosseriestruktur des Elektrofahrzeugs gemäss einer ersten Variante der Zapfenverbindung;
- Fig. 4: eine perspektivische Darstellung einer Zapfenverbindung der Karosseriestruktur des Elektrofahrzeugs, wobei die Figur 4A und Figur 4B eine zweite Variante der Zapfenverbindung vor und nach dem Herstellen der Verbindung zeigen;
- Fig. 5: eine perspektivische Darstellung einer Zapfenverbindung der Karosseriestruktur des Elektrofahrzeugs gemäss einer dritten Variante der Zapfenverbindung vor dem Herstellen der Verbindung;
- Fig. 6: perspektivische Darstellungen eines Abdeckprofils und eines mit solchen Abdeckprofilen versehenen Verbindungszapfens für eine vierte Variante der Zapfenverbindung;
- Fig. 7: in den Figuren 7A bis 7F perspektivische Schnittdarstellungen verschiedener geeigneter Sandwichplatten;
- Fig. 8: eine perspektivische Darstellung einer Zapfenverbindung der Karosseriestruktur des Elektrofahrzeugs gemäss einer fünften Variante der Zapfenverbindung nach dem Herstellen der Verbindung;
- Fig. 9: einen Vertikalschnitt A-A und einen Grundriss einer Zapfenverbindung nach dem Herstellen der Verbindung gemäss der fünften Variante.

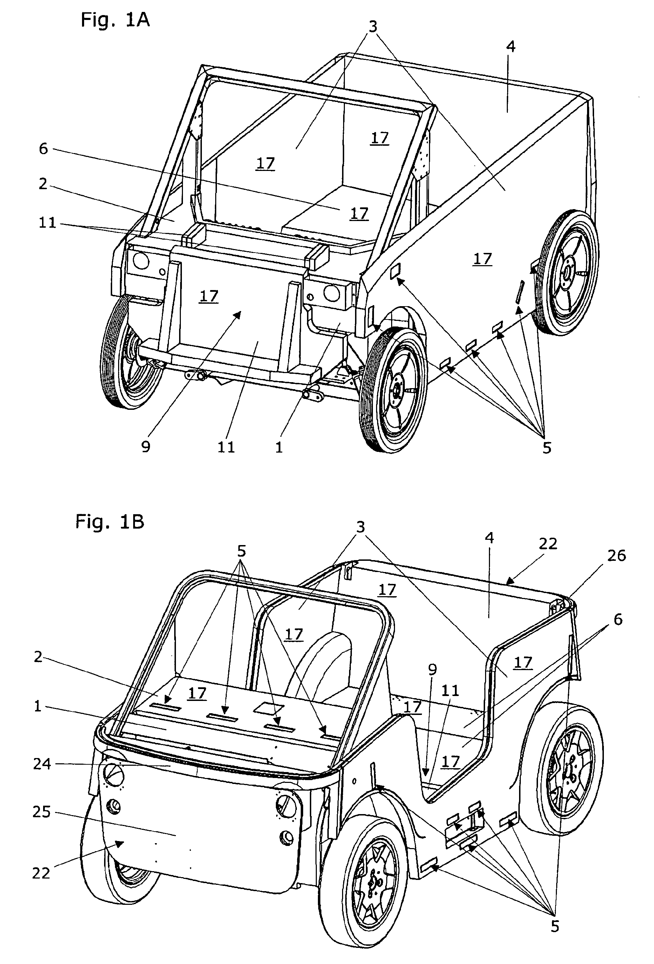

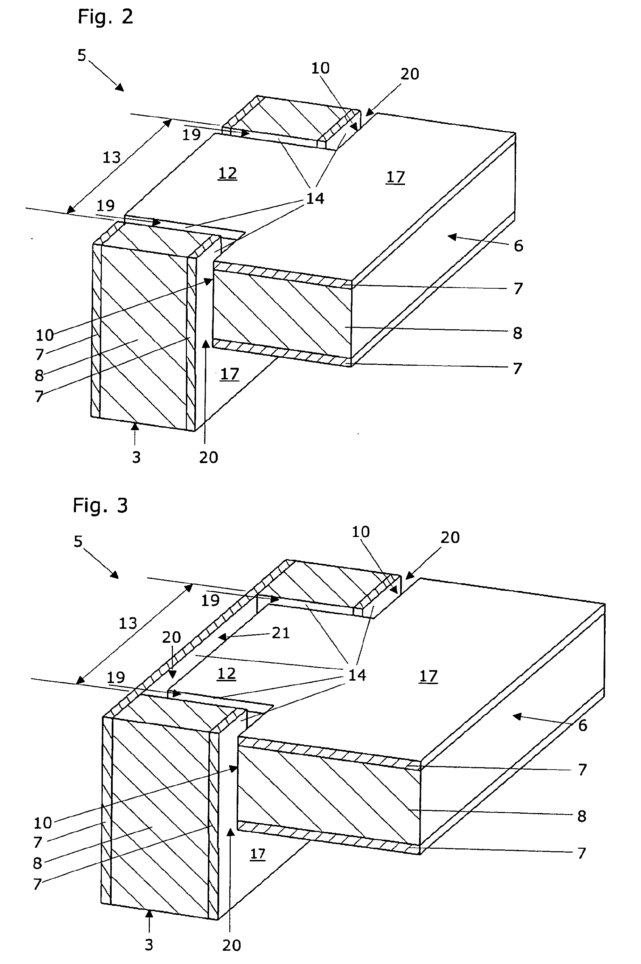

Der Grundaufbau eines erfindungsgemässen vierräderigen Elektrofahrzeugs ist in der Figur 1 in perspektivischen Ansichten dargestellt. In der Figur 1A ist eine erste Version abgebildet. Wie zu erkennen ist, ist die tragende Karosseriestruktur dieser ersten Version aus mehreren ebenen plattenförmigen Bauteilen 1,2,3,4,6 aufgebaut, welche gemäss dem erfindungsgemässen Verfahren durch Zapfenverbindungen 5, also mittels Verbindungszapfen 12 (vgl. beispielsweise Fig. 2), die an zumindest einer Umfangskante 19 des jeweiligen Plattenmaterials angeordnet sind, und die aus dem Plattenmaterial des ersten Bauteils 6 gebildet sind, miteinander verbunden wurden. Die einzelnen Bauteile, im vorliegenden Fall die vorderen Traversen 1,2, die Seitenwände 3, die Heckwand 4 und die Bodenplatten 6, wurden aus grossen Sandwichmaterialplatten ausgeschnitten. Im vorliegenden Fall besteht, wie aus Fig. 2 ersichtlich ist, das Sandwichplattenmaterial aus Deckschichten 7 aus einer duktilen metallischen Legierung (Aluminiumblech) und einem schlagzähen Kernmaterial 8 (Polyurethanschaum) und weist Oberflächen 17 auf. Alternativ dazu kann eine Deckschicht gewählt werden, die selbst aus zwei dünneren Aluminiumplatten und einem dazwischen angeordneten Kunststoffkern besteht (nicht gezeigt).

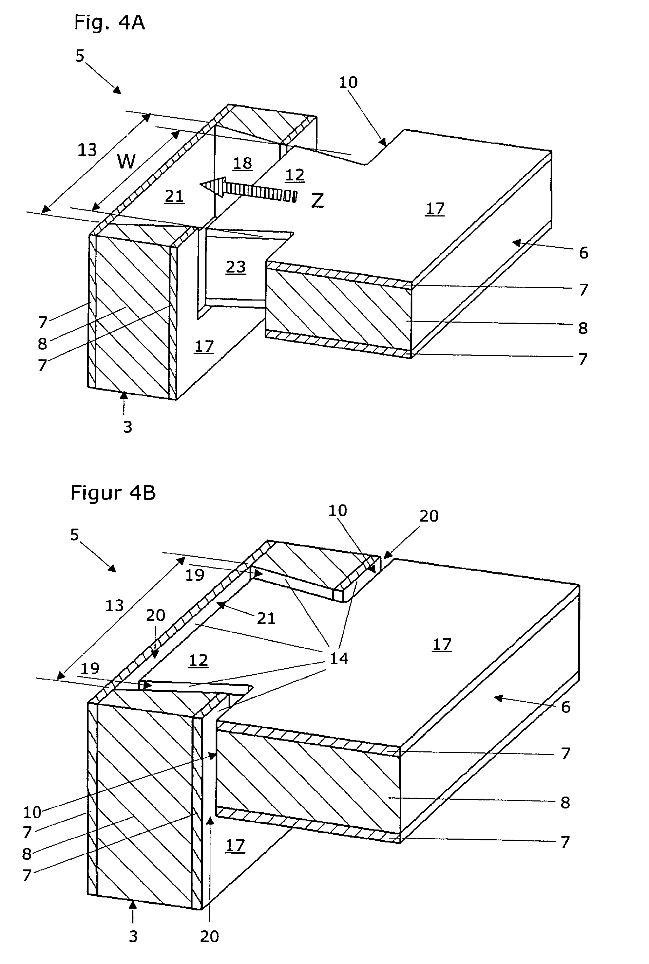

In dieser Fig, 1A weisen die Seitenwände 3 Aufnahmeöffnungen 13 (vgl. z.B. Fig. 2) zur Aufnahme der Verbindungszapfen 12 auf, wobei diese Aufnahmeöffnungen 13 in zumindest einer Oberfläche 17 dieser zweiten Bauteile 3 angeordnet werden. Die Aufnahmeöffnungen 13 können dabei als umfangsmässig geschlossene Durchgangslöcher (vgl. Fig. 1A) oder als Sacklöcher (vgl. z.B. Fig. 3 oder 4) ausgebildet werden.

Wie weiter zu erkennen ist, ist der Vorderwagen aus stehenden plattenförmigen Sandwichelementen 11 aufgebaut, welche im Frontbereich des Fahrzeugs zusammen mit einem Teil der übrigen tragenden Karosseriestruktur ein rundum geschlossenes Batteriefach 9 bilden. Die Sandwichelemente 11, sind aus dem gleichen Sandwichplattenmaterial gefertigt wie die übrige Karosseriestruktur 1,2,3,4,6 und ebenfalls gemäss dem erfindungsgemässen Verfahren mittels Verbindungszapfen 12 (vgl. beispielsweise Fig. 2) miteinander und mit der zuvor erwähnten Struktur verbunden. Die Verbindungszapfen 12 sind an zumindest einer Umfangskante 10 des jeweiligen Plattenmaterials angeordnet und aus dem Plattenmaterial des ersten Bauteils 6 gebildet. Auf Grund der geringen Wärmeleitfähigkeit des Kernmaterials 8 ergibt sich ein thermisch isolierend wirkendes Batteriefach 9, was den Vorteil hat, dass das Fahrzeug, welches vorzugsweise mit Li-Ion Batterien ausgestattet ist, auch bei tiefen Temperaturen eine gute Batterieleistung zur Verfügung hat. Gleichzeitig bildet das Batteriefach 9 auf Grund seines Aufbaus und der verwendeten Materialien eine Crashbox zur Absorption kinetischer Energie im Falle einer Frontalkollision. Ebenfalls ist zu erkennen, dass die Seitenwände 3 der tragenden Karosseriestruktur jeweils von einem einzigen durchgehenden plattenförmigen Bauteil gebildet sind, was zu einer hervorragenden Steifigkeit der tragenden Karosserie führt.

In der Figur 1B ist eine zweite Version eines erfindungsgemässen vierräderigen Elektrofahrzeugs abgebildet. Auch hier ist die tragende Karosseriestruktur aus mehreren ebenen plattenförmigen Bauteilen 1,2,3,4,6 aufgebaut, welche gemäss dem erfindungsgemässen Verfahren durch Zapfenverbindungen 5 miteinander verbunden sind. Die einzelnen Bauteile, im vorliegenden Fall die vorderen Traversen 1,2, die Seitenwände 3, die Heckwand 4 und die Bodenplatten 6, wurden aus grossen Sandwichmaterialplatten ausgeschnitten. Auch hier besteht, wie aus Fig. 2 ersichtlich ist, das Sandwichplattenmaterial vorzugsweise aus Deckschichten 7 aus einer duktilen metallischen Legierung (Aluminiumblech) und einem schlagzähen Kernmaterial 8 (Polyurethanschaum) und weist Oberflächen 17 auf. In dieser Fig. 1B weisen die Seitenwände 3 Aufnahmeöffnungen 13 (vgl. z.B. Fig. 2) zur Aufnahme der Verbindungszapfen 12, wobei diese Aufnahmeöffnungen 13 in zumindest einer Oberfläche 17 dieser zweiten Bauteile 3 angeordnet werden. Die Aufnahmeöffnungen 13 können dabei als umfangsmässig geschlossene Durchgangslöcher (vgl. Fig. 1B) oder als Sacklöcher (vgl. z.B. Fig. 3 oder 49 ausgebildet werden.

Wie weiter zu erkennen ist, bilden auch hier plattenförmige Sandwichelemente 11 ein rundum geschlossenes Batteriefach 9, das in diesem Fall aber in etwa in der Mitte des Wagenbodens und vorzugsweise im Bereich der Sitze positioniert ist. Dadurch ergibt sich eine zentrale und tiefe Platzierung des Schwerpunkts eines entsprechenden Elektrofahrzeugs. Die Sandwichelemente 11 sind aus dem gleichen Sandwichplattenmaterial gefertigt wie die übrige Karosseriestruktur 1,2,3,4,6 und ebenfalls mittels Verbindungszapfen 12 (vgl. beispielsweise Fig. 2) miteinander und mit der zuvor erwähnten Struktur verbunden. Die Verbindungszapfen 12 sind an zumindest einer Umfangskante 19 des jeweiligen Plattenmaterials angeordnet und aus dem Plattenmaterial des ersten Bauteils 6 gebildet. Auf Grund der geringen Wärmeleitfähigkeit des Kernmaterials 8 ergibt sich ein thermisch isolierend wirkendes Batteriefach 9, was einerseits den Vorteil hat, dass das Fahrzeug, welches mit Li-Ion Batterien ausgestattet ist, auch bei tiefen Temperaturen eine gute Batterieleistung zur Verfügung hat. Andererseits bildet das Batteriefach 9 auf Grund seines Aufbaus und der verwendeten Materialien eine steife Schutzhülle, welche den wertvollen Energiespeicher vor allen möglichen mechanischen Einfüssen schützt. In dieser zweiten Variante des efindungsgemässen Elektromobils bilden ein Frontbügel 24 und eine Frontplatte 25 eine vordere Crash-Struktur 22. Ein Heckbügel 26 ist Teil der hinteren Crash-Struktur 22.

Die Figur 2 zeigt eine perspektivische Darstellung der Zapfenverbindungen 5 zwischen einer Bodenplatte 6 und einer Seitenwand 3 der Karosseriestruktur, wobei zur besseren Erkennbarkeit die Seitenwand 3, welche hier das anspruchsgemässe zweite plattenförmige Bauteil bildet, geschnitten in der Ebene der Oberseite der oberen Deckschicht 7 der Bodenplatte 6 dargestellt ist, welche hier das anspruchsgemässe erste plattenförmige Bauteil bildet und eine Oberfläche 17 aufweist.

Wie zu erkennen ist, bildet die Bodenplatte 6 an der dargestellten Umfangskante 10 einen geraden Verbindungszapfen 12, welcher eine als Durchgangsloch ausgebildete Aufnahmeöffnung 13 in der Seitenwand 3 durchsetzt. Die Aufnahmeöffnung 13 umschliesst den Umfang des Verbindungszapfens 12 vollständig mit einem Abstand von 2-3 mm, der hier als Spalt 19 bezeichnet wird. Auch in den ausserhalb der Aufnahmeöffnungen liegenden Angrenzungsbereichen sind die Bodenplatte 6 und die Seitenwand 3 etwa 2-3 mm voneinander beabstandet. Der so gebildete Zwischenraum 20 zwischen der Bodenplatte 6 und der Seitenwand 3 ist mit einer Füllmasse 14, in diesem Fall mit einem Polyurethanklebstoff ausgefüllt, welcher die Bauteile 3,6 miteinander verklebt. Die Stirnfläche des Verbindungszapfens 12 der Bodenplatte 6 ist auf der Aussenseite der Seitenwand 3 sichtbar (vgl. auch Fig. 1).

Die Figur 3 zeigt eine Darstellung wie Fig. 2 einer ersten Variante der zuvor diskutierten Zapfenverbindung 5, welche sich von dieser dadurch unterscheidet, dass die Aufnahmeöffnung 13 in der Seitenwand 3 als Sackloch ausgebildet ist, wobei die Innenseite der Deckschicht 7 den Sacklochgrund 21 bildet. Die Aufnahmeöffnung 13 umschliesst den Umfang des Verbindungszapfens 12 vollständig mit einem Abstand von 2-3 mm, der hier als Spalt 19 bezeichnet wird. Wie zu erkennen ist, besteht hier zwischen der Stirnseite des Verbindungszapfens 12 und dem Sacklochgrund 21 ebenfalls ein Abstand von 1-2 mm, und der so gebildete Zwischenraum 20 ist ebenfalls mit einer Füllmasse 14, in diesem Fall mit PUR-Klebstoff gefüllt. Erfolgreich verwendet wurde z.B. das Produkt SIKAFLEX^{®}-252 (Sika Deutschland GmbH, D72574 Bad Urach, Deutschland), ein standfester, pastöser 1-Komponenten-Polyurethanklebstoff, der mit Luftfeuchtigkeit zu einem Elastomer aushärtet. Alternativ dazu, kann z.B. auch das Produkt ZWALUW HYBRIFIX SUPER 7 (Den Braven Sealants bv, 4900 AD Oosterhout, Holland), eine Einkomponentenkleb- und Dichtmasse auf der Basis von MS Polymer verwendet werden, das unter Einfluss von Luftfeuchtigkeit zu einer dauerelastischen Masse vulkanisiert.

Die Figuren 4A und 4B zeigen Darstellungen wie Fig. 2 einer zweiten Variante der Zapfenverbindung 5 vor (Fig. 4A) und nach (Fig. 4B) dem Herstellen der Verbindung zwischen der Seitenwand 3 und der Bodenplatte 6. Wie zu erkennen ist, unterscheidet sich diese Zapfenverbindung dadurch von der in Fig. 3 dargestellten, dass sowohl der Verbindungszapfen 12 als auch die zugehörige Aufnahmeöffnung 13 in der Oberfläche 17 schwalbenschwanzförmig ausgebildet sind. Diese Aufnahmeöffnung 13 weist seitliche Innenflächen 18 auf, die vorzugsweise parallel zu den entsprechenden Seitenflächen 23 des Verbindungszapfens 12 ausgerichtet sind.

Wie aus der Figur 4A ersichtlich wird, ist es hierbei wichtig, dass die lichte Weite W des Eintrittsquerschnitts der Aufnahmeöffnung 13 grösser oder gleich der Weite des grössten Querschnitts des Verbindungszapfens 12 ist, um ein Eintreten desselben in der Einführungsrichtung Z in die Aufnahmeöffnung 13 zu ermöglichen. Diese Ausführungsform weist den Vorteil auf, dass durch den verfestigten PUR-Kleber 14 im Spalt 19 (vgl. Fig. 4B) zwischen den seitlichen Begrenzungen der Aufnahmeöffnung 13 und den Längsseiten des Verbindungszapfens 12 ein Formschluss in einer Richtung entgegen der Einführungsrichtung Z entsteht, zusätzlich zu dem durch die Adhäsionswirkung des PUR-Klebers hervorgerufenen Kraftschluss.

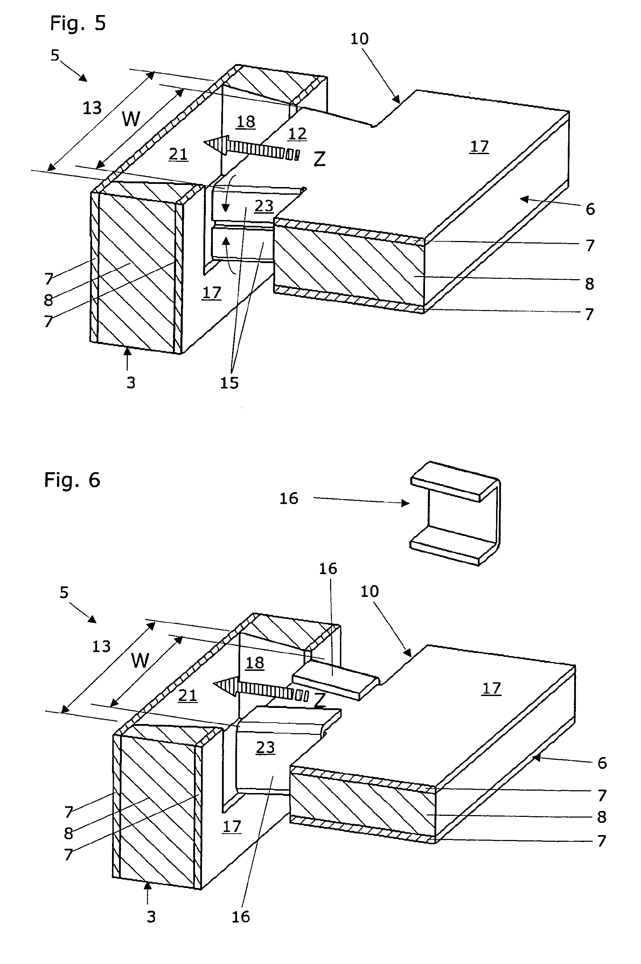

Die Figur 5 zeigt eine Darstellung wie Fig. 4A einer dritten Variante der Zapfenverbindung 5 vor dem Herstellen der Verbindung zwischen der Bodenplatte 6 und der Seitenwand 3 mit der Oberfläche, wobei sich diese Zapfenverbindung 5 von der in den Figuren 4A und 4B dargestellten Verbindung dadurch unterscheidet, dass die Längsseiten des Verbindungszapfens 12 teilweise mit einer Abdeckschicht 15 abgedeckt sind, welche aus um 90° abgeklappten Bereichen (vgl. Pfeile in Fig. 5) der beiden Deckschichten 7 gebildet sind. Auch hier weist die Aufnahmeöffnung 13 seitliche Innenflächen 18 auf, die vorzugsweise parallel zu den entsprechenden Seitenflächen 23 des Verbindungszapfens 12 ausgerichtet sind. Wie zu erkennen ist, verbleibt an den Längsseiten in der Mitte der Plattendicke ein schmaler, nicht-abgedeckter Bereich, in welchem die Kernschicht bzw. das Kernmaterial 8 sichtbar ist. Nach dem Zusammenfügen und Verfestigen des PUR-Klebers ergibt sich eine Verbindung wie in Fig. 4B dargestellt, jedoch mit verbesserter Festigkeit.

Die Figur 6 zeigt ein Abdeckprofil 16 (oben rechts) zur Bildung einer Abdeckschicht auf einer Längs- oder Stirnseite eines Verbindungszapfens (nicht gezeigt) und einen an seinen beiden Längsseiten mit solchen Abdeckprofilen 16 versehenen Verbindungszapfen 12 für eine vierte Variante der Zapfenverbindung 5 in einer perspektivischen Darstellung. Die Abdeckprofile 16 sind durch Klebung mit den Deckschichten 7 und dem Kernmaterial 8 verbunden. Nach dem Zusammenfügen und Verfestigen des PUR-Klebers ergibt sich eine Verbindung ähnlich der in Fig. 4B dargestellten, jedoch auch hier mit verbesserter Festigkeit.

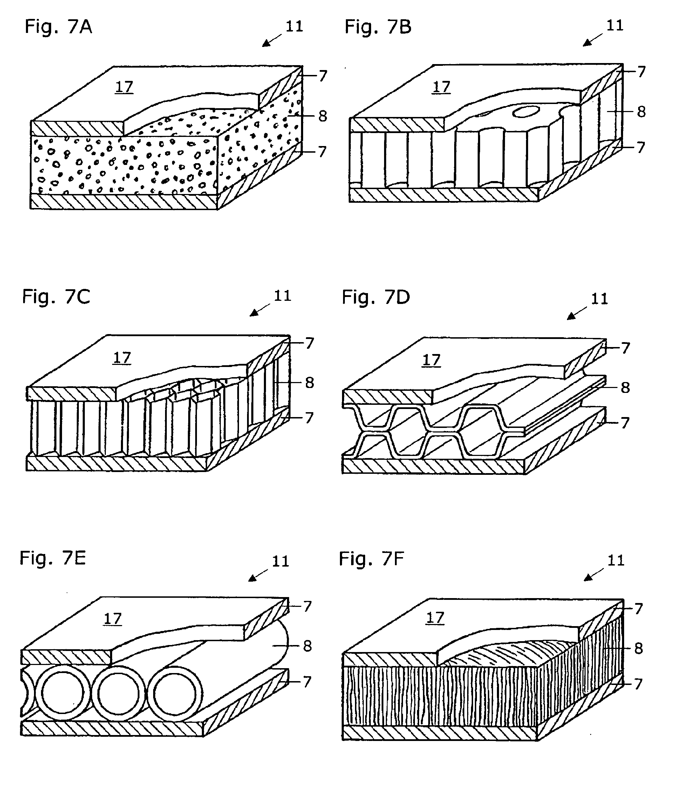

Die Figuren 7A bis 7F zeigen verschiedene für die Bildung einer leichten tragenden Karosseriestruktur gut geeignete Sandwichplatten 11 in einer perspektivischen Schnittdarstellung. Die einzelnen Platten unterscheiden sich im Wesentlichen durch den Aufbau ihrer Kernschicht bzw. die Art des Kernmaterials 8, wobei die Sandwichplatte 11 in Fig. 7A einen Schaumstoffkern aufweist, die in Fig. 7B einen Lochplattenkern, die in Fig. 7C einen Wabenkern, die in Fig. 7D einen Profilkern, die in Fig. 7E einen Rohrkern und die in Fig. 7F einen Balsaholzkern. Die Deckschichten 7 dieser Platten bestehen beispielsweise aus Blechmaterial (z.B. Aluminiumblech), Kunststoffplatten oder Sperrholz. Alternativ dazu können Deckschichten 7 gewählt werden, die selbst aus zwei dünneren Aluminiumplatten und einem dazwischen angeordneten Kunststoffkern bestehen (nicht gezeigt).

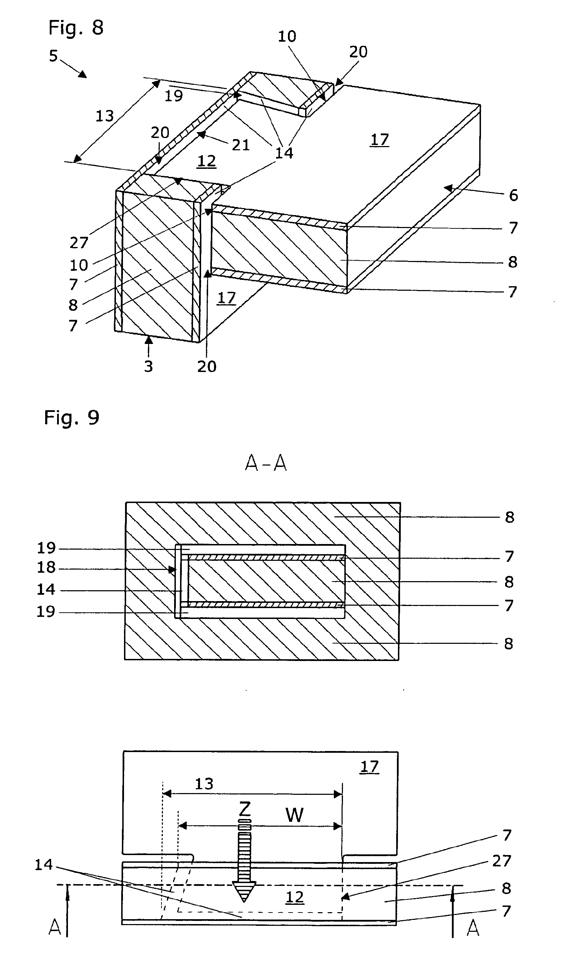

Die Figur 8 zeigt eine perspektivische Darstellung einer Zapfenverbindung 5 der Karosseriestruktur des Elektrofahrzeugs gemäss einer fünften Variante der Zapfenverbindung nach dem Herstellen der Verbindung. Der hier dargestellte Verbindungszapfen 12 ist als sogenannter Richtzapfen ausgebildet und weist eine Anschlagseite 27 auf, die hier als gerade Seitenfläche dargestellt ist, und die ohne Abstand oder Spalt direkt der seitlichen Innenoberfläche der Aufnahmeöffnung 13 anliegt. Gegenüber der Anschlagseite 27 weist der Verbindungszapfen 12 eine hinterschnittene Struktur auf, die als "halber Schwalbenschwanz" ausgebildet ist. Der Zwischenraum zwischen dem Sacklochgrund 21 und der Stirnseite des Verbindungszapfens 12 ist wie auch der Spalt 19 und der übrige Zwischenraum 20 zwischen den beiden Bauteilen 6,3 mit einer verfestigten Füllmasse 14 ausgefüllt. Alternativ zu der Darstellung in der Fig. 8 (nicht gezeigt), kann ein Verbindungszapfen 12 auf zwei oder sogar drei seiner Seitenflächen als Richtzapfen ausgebildet sein; so dass ein genaues Ausrichten auf Anschlag in einer oder zwei Richtungen des Raumes erfolgen kann. Als weitere Möglichkeit bietet sich das Anschlagen der Stirnseite des Verbindungszapfens auf dem Sacklochgrund 21 (nicht gezeigt), so dass ein genaues Ausrichten zweier Bauteile 6,3 in allen drei Richtungen des Raumes erfolgen kann. Allerdings soll mindestens zwischen einer Seitenfläche 23 des Verbindungszapfens 12 und der gegenüberliegenden seitlichen Innenfläche 18 der Aufnahmeöffnung 13 ein Spalt 19 verbleiben, damit dieser Spalt 19 mit einer verfestigbaren Füllmasse 14 aufgefüllt werden kann.

Auch hier sind grosse Spaltweiten bzw. Zwischenräume von 1 bis 5 mm gezeigt, so dass als Füllmasse 14 PUR verwendet werden kann. Alternativ zu solch grossen Spaltweiten können diese nur 0.1 bis 0.5 betragen und es kann ein kommerziell erhältlicher Epoxidharz-Klebstoff als Füllmasse 14 eingesetzt werden. Diese Bemerkung gilt sinngemäss auch für die in den Figuren 2 bis 4 gezeigten Ausführungsformen der erfindungsgemässen Fahrzeug-Tragstruktur. In allen Figuren sind die entsprechenden Teile mit den gleichen Bezugszeichen versehen, auch wenn diese nicht in allen Fällen ausführlich beschrieben sind. Für einen Fachmann sinnvolle Kombinationen der gezeigten und/oder beschriebenen Merkmale der efindungsgemässen Fahrzeug-Tragstruktur gehören zum Umfang der hier vorliegenden Erfindung.

Die Figur 9 zeigt einen Vertikalschnitt A-A und einen entsprechenden Grundriss einer Zapfenverbindung 5 nach dem Herstellen der Verbindung gemäss der fünften Variante (vgl. Fig. 8). Aus dieser Darstellung wird klar, dass sich zwischen den Oberflächen 17 dieses Zapfens 12 und den gegenüberliegenden Innenflächen der Aufnahmeöffnung 13 ebenfalls ein mit einer Füllmasse 14 aufzufüllender Spalt 19 befindet. Diese Beobachtung gilt auch für die in den Figuren 2 bis 6 gezeigten Ausführungsformen, so dass dort von einem vollständig umlaufenden Spalt 13 gesprochen werden kann.

### Bezugszeichenliste

- 1: vordere Traverse, Karosseriestruktur
- 2: vordere Traverse, Karosseriestruktur
- 3: zweite(s) plattförmiges Bauteil, Seitenwand, Karosseriestruktur
- 4: Heckwand, Karosseriestruktur
- 5: Zapfenverbindung
- 6: erste(s) plattförmiges Bauteil, Bodenplatte, Karosseriestruktur
- 7: Kalt- oder warmverformbare Deckschicht
- 8: Kernmaterial
- 9: Batteriefach, Schutzhülle
- 10: Umfangskante eines Bauteils
- 11: Sandwichplatte
- 12: Verbindungszapfen
- 13: Aufnahmeöffnung
- 14: Verfestigbare Füllmasse
- 15: Abdeckschicht
- 16: Abdeckprofil
- 17: Oberfläche des Bauteils
- 18: seitliche Innenfläche einer Aufnahmeöffnung
- 19: Spalt
- 20: Zwischenraum
- 21: Sacklochgrund
- 22: Crash-Struktur
- 23: Seitenfläche des Verbindungszapfens
- 24: Frontbügel
- 25: Frontplatte
- 26: Heckbügel
- 27: Anschlagseite

- W: lichte Weite
- Z: Einbringungsrichtung

## Patentansprüche

1. Verfahren zur Herstellung einer Fahrzeug-Tragstruktur, umfassend die Schritte:
(a) Bereitstellen eines ersten plattenförmigen Bauteils (6) mit einem oder mehreren Verbindungszapfen (12), die an zumindest einer Umfangskante (10) des Bauteils (6) angeordnet sind;
(b) Bereitstellen eines zweiten plattenförmigen Bauteils (3) mit einer oder mehreren Aufnahmeöffnung(en) (13) zur Aufnahme von Verbindungszapfen (12) des ersten plattenförmigen Bauteils (6);
(c) Einbringen zumindest eines Verbindungszapfens (12) des ersten Bauteils (6) in jeweils eine Aufnahmeöffnung (13) des zweiten Bauteils (3); und
(d) Ausrichten der beiden Bauteile (3,6) zueinander derart, dass diese Bauteile (3,6) bestimmungsgemäss zueinander ausgerichtet sind,
wobei die an zumindest einer Umfangskante (19) angeordneten Verbindungszapfen (12) aus dem Plattenmaterial des ersten Bauteils (6) gebildet und die Aufnahmeöffnungen (13) zur Aufnahme von Verbindungszapfen (12) in zumindest einer Oberfläche (17) des zweiten Bauteils (3) angeordnet werden, und wobei die Aufnahmeöffnungen (13) als umfangsmässig geschlossene Durchgangs- oder Sacklöcher ausgebildet und derart dimensioniert werden, dass bei bestimmungsgemäss zueinander ausgerichteten ersten und zweiten plattenförmigen Bauteilen (3,6) zwischen den Verbindungszapfen (12) und den Begrenzungen der Aufnahmeöffnung (13) zumindest ein Spalt (19) verbleibt, **dadurch gekennzeichnet, dass** die beiden plattenförmigen Bauteile (3,6) durch vollständiges Auffüllen zumindest dieses einen Spalts (19) zwischen den Verbindungszapfen (12) und den Begrenzungen der Aufnahmeöffnungen (13) mit einer verfestigbaren Füllmasse (14) sowie durch ein Verfestigen der Füllmasse (14) verbunden werden,
**und dass** zumindest ein Teil der Verbindungszapfen (12) des ersten plattenförmigen Bauteils (6) und/oder die zugeordneten Aufnahmeöffnungen (13) des zweiten plattenförmigen Bauteils (3) eine bezogen auf eine Einbringungsrichtung (Z) der Verbindungszapfen (12) einseitig oder beidseitig hinterschnittene Kontur aufweisen, wodurch erst durch das Verfestigen der Füllmasse (14) zwischen dem jeweiligen Verbindungszapfen (12) und den Begrenzungen der zugeordneten Aufnahmeöffnung (13) durch die verfestigte Füllmasse (14) zumindest in einer Richtung entgegen der Einbringungsrichtung (Z) ein Formschluss entsteht.

2. Verfahren nach Anspruch 1, **dadurch gekennzeichnet, dass** das Einbringen der Verbindungszapfen (12) des ersten Bauteils (6) in die Aufnahmeöffnungen (13) des zweiten Bauteils (3) in einer Einbringungsrichtung (Z) vollzogen wird, wobei sich diese Einbringungsrichtung (Z) im Wesentlichen parallel zu einer Oberfläche (17) des ersten Bauteils (6) erstreckt, und wobei die Oberfläche (17) des ersten Bauteils (6) mit einer Oberfläche (17) des zweiten Bauteils (3) bei bestimmungsgemäss zueinander ausgerichteten ersten und zweiten plattenförmigen Bauteilen (3,6) einen Winkel von 70° bis 110° einschliesst.

3. Verfahren nach einem der Ansprüche 1 oder 2, **dadurch gekennzeichnet, dass** die ersten und zweiten plattenförmigen Bauteile (3,6) derartig dimensioniert werden, dass bei bestimmungsgemäss zueinander ausgerichteten ersten und zweiten plattenförmigen Bauteilen (3,6) in den ausserhalb der Aufnahmeöffnungen (13) liegenden Angrenzungsbereichen der ersten und zweiten Bauteile (3,6) zueinander ein Zwischenraum (20) zwischen diesen gebildet wird, welcher beim Verbinden der beiden plattenförmigen Bauteile (3,6) ebenfalls mit der Füllmasse (14) ausgefüllt wird.

4. Verfahren nach einem der vorhergehenden Ansprüche, **dadurch gekennzeichnet, dass** eine sich dauerelastisch verfestigende Füllmasse (14), vorzugsweise ein dauerelastischer geschäumter oder ungeschäumter Dickschichtklebstoff, der ausgewählt ist aus einer auf Polyurethan, Silikon oder Kautschuk basierenden Gruppe von Dickschichtklebstoffen, verwendet wird, wobei die aufzufüllenden Spalte (19) jeweils eine Mindestspaltweite von 1 mm und eine maximale Spaltweite von 5 mm aufweisen.

5. Verfahren nach einem der Ansprüche 1 bis 3, **dadurch gekennzeichnet, dass** als Füllmasse (14) ein Dünnschicht-Klebstoff verwendet wird, wobei die aufzufüllenden Spalte (19) jeweils eine Mindestspaltweite von 0.1 mm und eine maximale Spaltweite von 0.5 mm aufweisen.

6. Verfahren nach einem der vorhergehenden Ansprüche, **dadurch gekennzeichnet, dass** zumindest ein Teil der Verbindungszapfen (12) des ersten plattenförmigen Bauteils (6) als Schwalbenschwanzzapfen ausgebildet wird und/oder die zugeordneten Aufnahmeöffnungen (13) des zweiten plattenförmigen Bauteils (3) mit einer entsprechenden schwalbenschwanzförmigen seitlichen Innenfläche (19) ausgebildet werden.

7. Verfahren nach einem der vorhergehenden Ansprüche, **dadurch gekennzeichnet, dass** zumindest ein Teil der Verbindungszapfen (12) des ersten plattenförmigen Bauteils (6) als Richtzapfen mit einer geraden Seitenfläche (23) ausgebildet ist und die entsprechenden Aufnahmeöffnungen (13) des zweiten plattenförmigen Bauteils (3) eine zumindest gegenüber der geraden Seitenfläche (23) der Richtzapfen ebenfalls gerade seitliche Innenoberfläche oder Anschlagseite (27) aufweisen.

8. Verfahren nach einem der vorhergehenden Ansprüche, **dadurch gekennzeichnet, dass** zumindest ein Teil der Aufnahmeöffnungen (13) in dem zweiten plattenförmigen Bauteil (3) als Sacklöcher ausgebildet werden und die Füllmasse (14) vor dem Einbringen der Verbindungszapfen (12) in die Aufnahmeöffnungen (13) eingebracht wird, derart, dass beim Einbringen der Verbindungszapfen (12) in die Aufnahmeöffnungen (13) die Füllmasse (14) in die Spalte (19) gedrängt wird.

9. Verfahren nach einem der vorhergehenden Ansprüche, **dadurch gekennzeichnet, dass** die plattenförmigen Bauteile (3,6) jeweils aus ebenen Halbzeugmaterialplatten ausgeschnitten werden, wobei die ebenen Halbzeugmaterialplatten ausgewählt werden aus Sandwichplattenmaterial oder Mehrschichtverbundplattenmaterial, und wobei die aus dem Plattenmaterial des ersten Bauteils (6) gebildeten Verbindungszapfen (12) mit einem Verfahren ausgeschnitten werden, das aus der Gruppe ausgewählt ist, welche Fräsen, Laserschneiden, Wasserstrahlschneiden, Sägen und Ausstanzen umfasst.

10. Verfahren nach Anspruch 9, wobei das erste plattenförmige Bauteil (6) Deckschichten (7) aufweist, **dadurch gekennzeichnet, dass** die Verbindungszapfen (12) des ersten plattenförmigen Bauteils (6) Längsseiten und/oder Stirnseiten aufweisen, welche vor dem Einbringen der Verbindungszapfen (12) in die Aufnahmeöffnungen (13) des zweiten plattenförmigen Bauteils (3) zumindest teilweise mit einer Abdeckschicht (15) oder einem Abdeckprofil (16) versehen werden.

11. Verfahren nach Anspruch 10, wobei das erste plattenförmige Bauteil (6) kalt- oder warmverformbare Deckschichten (7) aufweist, **dadurch gekennzeichnet, dass** zur Bildung der Abdeckschichten (15) Bereiche mindestens einer der Deckschichten (7) des ersten plattenförmigen Bauteils (6) durch Umbiegen auf die Längsseiten und/oder die Stirnseiten der Verbindungszapfen (12) gelegt werden.

12. Verfahren nach Anspruch 11, wobei das erste plattenförmige Bauteil (6) ein kompressibles Kernmaterial (8) aufweist, **dadurch gekennzeichnet, dass** das Umbiegen der Bereiche der Deckschichten (7) unter einem Zusammendrücken des Kernmaterials (8) im Bereich der Längsseiten und/oder Stirnseiten der Verbindungszapfen (12) erfolgt.

13. Verfahren nach einem der vorhergehenden Ansprüche, wobei die plattenförmigen Bauteile (3,6) unter einem Winkel von zumindest annähernd 90° miteinander verbunden werden und die Aufnahmeöffnungen (13) als Sacklöcher mit einem Sacklochgrund (21) ausgebildet werden, **dadurch gekennzeichnet, dass** zwischen der Stirnseite des jeweiligen Verbindungszapfens (12) und dem Sacklochgrund (21) der zugeordneten Aufnahmeöffnung (13) zusätzlich eine mechanische Verbindung hergestellt wird.

14. Fahrzeug-Tragstruktur umfassend:
(a) zumindest ein erstes plattenförmiges Bauteil (6) mit einem oder mehreren, an zumindest einer Umfangskante (10) des Bauteils (6) angeordneten Verbindungszapfen (12); und
(b) zumindest ein zweites plattenförmiges Bauteil (3) mit einer oder mehreren Aufnahmeöffnung(en) (13) zur Aufnahme von Verbindungszapfen (12) des ersten plattenförmigen Bauteils (6);
wobei zumindest ein Verbindungszapfen (12) des ersten Bauteils (6) in jeweils eine Aufnahmeöffnung (13) des zweiten Bauteils (3) einschiebbar ausgebildet ist, wobei die ersten und zweiten Bauteile (3,6) bestimmungsgemäss zueinander ausrichtbar ausgebildet sind, wobei die Verbindungszapfen (12) aus dem Plattenmaterial des ersten Bauteils (6) gebildet und die Aufnahmeöffnungen (13) zur Aufnahme der Verbindungszapfen (12) in zumindest einer Oberfläche (17) des zweiten Bauteils (3) angeordnet sind, und wobei die Aufnahmeöffnungen (13) als umfangsmässig geschlossene Durchgangs- oder Sacklöcher ausgebildet und so dimensioniert sind, dass bei bestimmungsgemäss zueinander ausgerichteten ersten und zweiten plattenförmigen Bauteilen (3,6) zwischen zumindest einem in eine Aufnahmeöffnung (13) eingebrachten Verbindungszapfen (12) und zumindest einer seitlichen Innenfläche (18) dieser Aufnahmeöffnung (13) ein Spalt (19) verbleibt,
**dadurch gekennzeichnet, dass** die Fahrzeug-Tragstruktur zum vollständigen Auffüllen zumindest dieses einen Spalts (19) zwischen den Verbindungszapfen (12) und den Begrenzungen der Aufnahmeöffnung (13) eine verfestigbare Füllmasse (14) umfasst, welche zum Verbinden der bestimmungsgemäss zueinander ausgerichteten plattenförmigen Bauteile (3,6) verfestigt ist, **und dass** zumindest ein Teil der Verbindungszapfen (12) des ersten plattenförmigen Bauteils (6) und/oder die zugeordneten Aufnahmeöffnungen (13) des zweiten plattenförmigen Bauteils (3) eine bezogen auf eine Einbringungsrichtung (Z) der Verbindungszapfen (12) einseitig oder beidseitig hinterschnittene Kontur aufweisen, die in Wirkverbindung mit der verfestigten Füllmasse (14) zwischen dem jeweiligen Verbindungszapfen (12) und den Begrenzungen der zugeordneten Aufnahmeöffnung (13) zumindest in einer Richtung entgegen der Einbringungsrichtung (Z) einen Formschluss bewirkt.

15. Fahrzeug-Tragstruktur nach Anspruch 14, **dadurch gekennzeichnet, dass** sie als tragende Karosseriestruktur (1,2,3,4,6) ausgebildet ist und Seitenwände umfasst, die jeweils von einem einzigen durchgehenden, plattenförmigen Bauteil gebildet sind.

16. Fahrzeug mit einer Tragstruktur nach Anspruch 14 oder mit einer tragenden Karosseriestruktur (1,2,3,4,6) nach Anspruch 15, **dadurch gekennzeichnet, dass** es als ein Motorfahrzeug ausgebildet ist, das ausgewählt ist aus der Gruppe, welche durch Strassenfahrzeuge, Wasserfahrzeuge und Luftfahrzeuge gebildet wird.

17. Fahrzeug nach Anspruch 16, **dadurch gekennzeichnet, dass** es ein Elektrofahrzeug ist und eine steife Schutzhülle (9) für zumindest einen Energiespeicher umfasst, wobei diese Schutzhülle (9) aus über Zapfenverbindungen (5) verbundenen Sandwichplatten (11) gebildet und vorzugsweise als ein im Betrieb rundum geschlossenes, thermisch isolierendes Batteriefach (9) ausgebildet ist.

18. Fahrzeug nach Anspruch 16 oder 17, **dadurch gekennzeichnet, dass** es ein Elektrofahrzeug ist und zumindest eine Crash-Struktur (22) aufweist, die aus Sandwichplatten (11) mit Deckschichten (7) aus einer duktilen metallischen Legierung und einem schlagzähen Kernmaterial (8) gebildet ist.

## Claims

1. A method for producing a vehicle support structure, comprising the following steps:
(a) providing a first plate-shaped component (6) having one or more connecting pins (12), which are arranged on at least one peripheral edge (10) of the component (6);
(b) providing a second plate-shaped component (3) having one or more receptacle opening(s) (13) for receiving connecting pins (12) of the first plate-shaped component (6);
(c) introducing at least one connecting pin (12) of the first component (6) into one receptacle opening (13) of the second component (3) in each case; and
(d) aligning the two components (3,6) to one another in such a manner that these components (3,6) are aligned to one another as intended,
the connecting pins (12) arranged on at least one peripheral edge (19) are formed from the plate material of the first component (6) and the receptacle openings (13) for receiving connecting pins (12) are arranged in at least one surface (17) of the second component (3), and the receptacle openings (13) being implemented as peripherally closed through holes or pocket holes and are dimensioned in such a manner that if the first and second plate-shaped components (3,6) are aligned to one another as intended, at least one gap (19) remains between the connecting pins (12) and the boundaries of the receptacle opening (13),
**characterized in that** the two plate-shaped components (3,6) are connected by completely filling up at least this one gap (19) between the connecting pins (12) and the boundaries of the receptacle openings (13) using a filling compound (14) that can be solidified, and by solidifying the filling compound (14), **and in that** at least a part of the connecting pins (12) of the first plate-shaped component (6) and/or the assigned receptacle openings (13) of the second plate-shaped component (3) have a contour which is undercut on one side or both sides in relation to an introduction direction (Z) of the connecting pins (12), whereby a form fit only arises through the solidification of the filling compound (14) between the respective connecting pins (12) and the boundaries of the assigned receptacle opening (13) through the solidified filling compound (14) at least in one direction opposite to the introduction direction (Z).

2. The method according to Claim 1, **characterized in that** the introduction of the connecting pins (12) of the first component (6) into the receptacle openings (13) of the second component (3) is completed in an introduction direction (Z), this introduction direction (Z) extending substantially parallel to a surface (17) of the first component (6), and the surface (17) of the first component (6) enclosing an angle of 70° to 110° with a surface (17) of the second component (3) when the first and second plate-shaped components (3, 6) are aligned to **one** another as intended.

3. The method according to one of Claims 1 or 2, **characterized in that** the first and second plate-shaped components (3,6) are dimensioned in such a manner that if the first and second plate-shaped components (3,6) are aligned as intended to one another, in the adjoining regions of the first and second components (3,6) to one another located outside the receptacle openings (13), an intermediate space (20) is formed between these components, which is also filled up using the filling compound (14) upon the connection of the two plate-shaped components (3,6).

4. The method according to one of the preceding claims, **characterized in that** a permanently elastic solidifying filling compound (14), preferably a permanently elastic foamed or unfoamed thick layer adhesive, which is selected from a group of thick layer adhesives based on polyurethane, silicone, or rubber, is used, the gaps (19) to be filled up respectively having a minimum gap width of 1 mm and a maximum gap width of 5 mm.

5. The method according to one of Claims 1 to 3, **characterized in that** a thin layer adhesives is used as the filling compound (14), the gaps (19) to be filled up respectively having a minimum gap width of 0.1 mm and a maximum gap width of 0.5 mm.

6. The method according to one of the preceding claims, **characterized in that** at least a part of the connecting pins (12) of the first plate-shaped component (6) are implemented as dovetail pins and/or the assigned receptacle openings (13) of the second plate-shaped component (3) are implemented having a corresponding dovetail-shaped lateral inner surface (19).

7. The method according to one of the preceding claims, **characterized in that** at least a part of the connecting pins (12) of the first plate-shaped component (6) are implemented as orienting pins having a linear lateral surface (23) and the corresponding receptacle openings (13) of the second plate-shaped component (3) also have a linear lateral inner surface or stop side (27) at least in relation to the linear lateral surface (23) of the orienting pins.

8. The method according to one of the preceding claims, **characterized in that** at least a part of the receptacle openings (13) in the second plate-shaped component (3) are implemented as pocket holes and the filling compound (14) is introduced into the receptacle openings (13) before the introduction of the connecting pins (12) in such a manner that upon the introduction of the connecting pins (12) into the receptacle openings (13), the filling compound (14) is displaced into the gaps (19).

9. The method according to one of the preceding claims, **characterized in that** the plate-shaped components (3,6) are respectively cut out of planar semifinished product material plates, the planar semifinished product material plates being selected from sandwich plate material or multilayer composite plate material, and the connecting pins (12) formed from the plate material of the first component (6) being cut out using a method which is selected from the group which comprises milling, laser cutting, waterjet cutting, sawing, and stamping.

10. The method according to Claim 9, the first plate-shaped component (6) having top layers (7), **characterized in that** the connecting pins (12) of the first plate-shaped component (6) have long sides and/or end sides which, before the introduction of the connecting pins (12) into the receptacle openings (13) of the second plate-shaped component (3), are at least partially provided with a cover layer (15) or a cover profile (16).

11. The method according to Claim 10, the first plate-shaped component (6) having top layers (7) that can be cold shaped or hot shaped, **characterized in that,** to form the cover layers (15), regions of at least one of the top layers (7) of the first plate-shaped component (6) are laid on the long sides and/or the end sides of the connecting pins (12) by bending over.

12. The method according to Claim 11, the first plate-shaped component (6) having a compressible core material (8), **characterized in that** the bending over of the regions of the top layers (7) is performed with a compression of the core material (8) in the region of the long sides and/or end sides of the connecting pins (12).

13. The method according to one of the preceding claims, the plate-shaped components (3,6) being connected to one another at an angle of at least approximately 90° and the receptacle openings (13) being implemented as pocket holes having a pocket hole base (21), **characterized in that** a mechanical connection is additionally produced between the end side of the respective connecting pin (12) and the pocket hole base (21) of the assigned receptacle opening (13).

14. A vehicle support structure comprising:
(a) at least one first plate-shaped component (6) having one or more connecting pins (12) arranged on at least one peripheral edge (10) of the component (6); and
(b) at least one second plate-shaped component (3) having one or more receptacle opening(s) (13) for receiving connecting pins (12) of the first plate-shaped component (6);
at least one connecting pin (12) of the first component (6) being implemented as respectively insertable into one receptacle opening (13) of the second component (3), the first and second components (3,6) being implemented so they can be aligned to one another as intended, the connecting pins (12) being formed from the plate material of the first component (6) and the receptacle openings (13) for receiving the connecting pins (12) being arranged in at least one surface (17) of the second component (3), and the receptacle openings (13) being implemented as peripherally closed through holes or pocket holes and being dimensioned so that if the first and second plate-shaped components (3,6) are aligned to one another as intended, a gap (19) remains between at least one connecting pin (12) introduced into a receptacle opening (13) and at least one lateral inner surface (18) of this receptacle opening (13),
**characterized in that** the vehicle support structure comprises a filling compound (14), that can be solidified, for completely filling up at least this one gap (19) between the connecting pins (12) and the boundaries of the receptacle opening (13), the filling compound being solidified to connect the plate-shaped components (3, 6) aligned to one another as intended,
**and in that** at least a part of the connecting pins (12) of the first plate-shaped component (6) and/or the assigned receptacle openings (13) of the second plate-shaped component (3) have an undercut contour on one side or both sides in relation to an introduction direction (Z) of the connecting pins (12) which, in an operational link with the solidified filling compound (14), causes a form fit between the respective connecting pins (12) and the boundaries of the assigned receptacle opening (13) at least in one direction opposite to the introduction direction (Z).

15. The vehicle support structure according to Claim 14, **characterized in that** it is implemented as a load-bearing vehicle body structure (1,2,3,4,6) and comprises side walls, which are each formed by a single continuous, plate-shaped component.

16. A vehicle having a support structure according to Claim 14 or having a load-bearing vehicle body structure (1,2,3,4,6) according to Claim 15, **characterized in that** it is implemented as a motor vehicle, which is selected from the group formed by road vehicles, water vehicles, and air vehicles.

17. The vehicle according to Claim 16, **characterized in that** it is an electric vehicle and comprises a stiff protective envelope (9) for at least one energy accumulator, this protective envelope (9) being formed from sandwich plates (11) connected via a pin connections (5) and preferably being implemented as a battery compartment (9) which is closed on all sides and thermally insulated in operation.

18. The vehicle according to Claim 16 or 17, **characterized in that** it is an electric vehicle and has at least one crash structure (22), which is formed from sandwich plates (11) having top layers (7) made of a ductile metallic alloy and an impact-resistant core material (8).

## Revendications

1. Procédé de fabrication d'une structure porteuse de véhicule, comprenant les étapes consistant à:
(a) mettre à disposition un premier composant en forme de plaque (6) comportant un ou plusieurs tourillons d'assemblage (12) qui sont disposés au niveau d'au moins une bordure périphérique (10) du composant (6);
(b) mettre à disposition un second composant en forme de plaque (3) comportant une ou plusieurs ouvertures de réception (13) destinées à loger des tourillons d'assemblage (12) du premier composant en forme de plaque (6);
(c) introduire au moins un tourillon d'assemblage (12) du premier composant (6) dans respectivement une ouverture de réception (13) du second composant (3); et
(d) ajuster les deux composants (3,6) l'un par rapport à l'autre de façon à ce que ces composants (3,6) soient ajustés l'un par rapport à l'autre conformément aux prescriptions,
où les tourillons d'assemblage (12) disposés au niveau d'au moins une bordure périphérique (19) sont formés à partir du matériau de plaque du premier composant (6) et les ouvertures de réception (13) destinées à loger les tourillons d'assemblage (12) sont disposées dans au moins une surface (17) du second composant (3), et où les ouvertures de réception (13) sont exécutées en tant que trous débouchants ou borgnes fermés sur la périphérie et sont dimensionnées de façon telle qu'avec les premier et second composants en forme de plaque (3,6) ajustés l'un par rapport à l'autre conformément aux prescriptions, il subsiste entre les tourillons d'assemblage (12) et les bords de l'ouverture de réception (13) au moins une fente (19),
**caractérisé en ce que** les deux composants en forme de plaque (3,6) sont reliés par remplissage total d'au moins cette fente (19) entre les tourillons d'assemblage (12) et les bords des ouvertures de réception (13) avec une masse de remplissage solidifiable (14) et par une solidification de la masse de remplissage (14),
**et en ce qu'**au moins une partie des tourillons d'assemblage (12) du premier composant en forme de plaque (6) et/ou les ouvertures de réception (13) coordonnées du second composant en forme de plaque (3) présentent un contour à contre-dépouille d'un côté ou des deux côtés par rapport à un sens d'insertion (Z) des tourillons d'assemblage (12), suite à quoi il se forme une fermeture géométrique uniquement par la solidification de la masse de remplissage (14) entre le tourillon d'assemblage respectif (12) et les bords de l'ouverture de remplissage (13) coordonnée par la masse de remplissage (14) solidifiée au moins dans une direction opposée au sens d'insertion (Z).

2. Procédé selon la revendication 1, **caractérisé en ce que** l'insertion des tourillons d'assemblage (12) du premier composant (6) dans les ouvertures de réception (13) du second composant (3) est accomplie dans un sens d'insertion (Z), ce sens d'insertion (Z) s'étendant essentiellement parallèlement à une surface (17) du premier composant (6), et la surface (17) du premier composant (6) formant avec une surface (17) du second composant (3) un angle de 70° à 110° avec les premier et second composants (3,6) en forme de plaque ajustés les uns avec les autres conformément aux prescriptions.

3. Procédé selon l'une des revendications 1 ou 2, **caractérisé en ce que** les premier et second composants en forme de plaque (3,6) sont dimensionnés de façon telle qu'une fois les premier et second composants (3,6) en forme de plaque ajustés les uns avec les autres conformément aux prescriptions, il se forme dans les zones limitrophes des premier et second composants (3,6), reposant à l'extérieur des ouvertures de réception (13), un espace intermédiaire (20) entre celles-ci qui est également rempli avec la masse de remplissage (14) lors de l'assemblage des deux composants en forme de plaque (3,6).

4. Procédé selon l'une des revendications précédentes, **caractérisé en ce qu'**on utilise une masse de remplissage (14) qui se solidifie avec élasticité permanente, de préférence une colle en couche épaisse moussée ou non moussée à élasticité permanente qui est sélectionnée dans un groupe de colles en couche épaisse à base de polyuréthane, de silicone ou de caoutchouc, la fente (19) à remplir présentant respectivement une largeur de fente minimum de 1 mm et une large de fente maximum de 5 mm.

5. Procédé selon l'une des revendications 1 à 3, **caractérisé en ce que** l'on utilise comme masse de remplissage (14) une colle en couche mince, la fente à remplir (19) présentant respectivement une largeur de fente minimum de 0.1 mm et une large de fente maximum de 0.5 mm.

6. Procédé selon l'une des revendications précédentes, **caractérisé en ce qu'**au moins une partie des tourillons d'assemblage (12) du premier composant en forme de plaque (6) est exécutée en tant que tenon en queue d'aronde et/ou que les ouvertures de réception (13) coordonnées du second composant en forme de plaque (3) sont exécutées avec une face interne latérale en forme d'aronde (19) correspondante.

7. Procédé selon l'une des revendications précédentes, **caractérisé en ce qu'**au moins une partie des tourillons d'assemblage (12) du premier composant en forme de plaque (6) est exécutée en tant que pivot d'orientation avec une face latérale rectiligne (23) et que les ouvertures de réception (13) correspondantes du second composant en forme de plaque (3) présentent une surface interne latérale ou surface de butée également rectiligne vis-à-vis de la face latérale rectiligne (23) des tourillons d'orientation.

8. Procédé selon l'une des revendications précédentes, **caractérisé en ce qu'**au moins une partie des ouvertures de réception (13) dans le second composant en forme de plaque (3) est exécutée en tant que trous borgnes et **en ce que** la masse de remplissage (14) est introduite avant l'insertion des tourillons d'assemblage (12) dans les ouvertures de réception (13), de façon à ce que lors de l'insertion des tourillons d'assemblage (12) dans les ouvertures de remplissage (13), la masse de remplissage (13) est poussée dans la fente (19).

9. Procédé selon l'une des revendications précédentes, **caractérisé en ce que** les composants en forme de plaque (3,6) sont découpés respectivement dans des plaques de matériau semi-finis planes, les plaques de matériau semi-fini planes étant sélectionnées parmi un matériau de panneau sandwich ou un matériau de panneau composite multicouche, et les tourillons d'assemblage (12) formés à partir du matériau de plaque du premier composant (6) étant découpés selon un procédé qui est sélectionné dans le groupe composé du fraisage, de la découpe au laser, de la découpe par jet d'eau, du sciage et de l'estampage.

10. Procédé selon la revendication 9, dans lequel le premier composant en forme de plaque (6) présente des couches de recouvrement (7), **caractérisé en ce que** les tourillons d'assemblage (12) du premier composant en forme de plaque (6) présentent des côtés longitudinaux et/ou des faces avant qui sont munis avant l'insertion des tourillons d'assemblage (12) dans les ouvertures de réception (13) du second composant en forme de plaque (3) au moins partiellement d'une couche de recouvrement (15) ou d'un profilé de recouvrement (16).

11. Procédé selon la revendication 10, dans lequel le premier composant en forme de plaque (6) présente des couches de recouvrement (7) déformables à froid ou déformables à chaud, **caractérisé en ce que** pour former les couches de recouvrement (15), des zones d'au moins une des couches de recouvrement (7) du premier composant en forme de plaque (6) sont posées par cintrage sur les côtés longitudinaux et/ou les faces avant des tourillons d'assemblage (12).

12. Procédé selon la revendication 11, dans lequel le premier composant en forme de plaque (6) présente un matériau d'âme (8) compressible, **caractérisé en ce que** le cintrage des zones des couches de recouvrement (7) se fait sous une compression du matériau d'âme (8) dans la zone des côtés longitudinaux et/ou des faces avant des tourillons d'assemblage (12).

13. Procédé selon l'une des revendications précédentes, dans lequel les composants en forme de plaque (3,6) sont reliés ensemble selon un angle d'au moins approximativement 90° et les ouvertures de réception (13) sont exécutées en tant que trous borgnes ayant une base de trou borgne (21), **caractérisé en ce qu'**entre la face avant du tourillon d'assemblage respectif (12) et le fond du trou borgne (21) de l'ouverture de réception (13) coordonnée est fabriquée en outre une liaison mécanique.

14. Structure porteuse de véhicule comprenant:
(a) au moins un premier composant en forme de plaque (6) présentant un ou plusieurs tourillons d'assemblage (12), disposés au niveau d'au moins une bordure périphérique (10) du composant (6); et
(b) au moins un second composant en forme de plaque (3) présentant une ou plusieurs ouvertures de réception (13) destinées à loger le tourillon d'assemblage (12) du premier composant en forme de plaque (6);
dans lequel au moins un tourillon d'assemblage (12) du premier composant (6) est exécuté pour pouvoir être introduit dans respectivement une ouverture de réception (13) du second composant (3), dans lequel les premier et second composants (3,6) sont exécutés pour pouvoir être ajustés l'un par rapport à l'autre conformément aux prescriptions, dans lequel les tourillons d'assemblage (12) sont formés à partir du matériau de plaque du premier composant (6) et les ouvertures de réception (13) destinées à loger les tourillons d'assemblage (12) sont disposées dans au moins une surface (17) du second composant (3), et dans lequel les ouvertures de réception (13) sont exécutées en tant que trous débouchants ou borgnes fermés sur la périphérie et dimensionnées de façon telle qu'avec les premiers et seconds composants en forme de plaque (3,6) ajustés les uns par rapport aux autres conformément aux prescriptions, il subsiste une fente (19) entre au moins un tourillon d'assemblage (12) pouvant être inséré dans une ouverture de réception (13) et au moins une face interne latérale (18) de cette ouverture de réception (13), **caractérisé en ce que** la structure porteuse de véhicule comporte pour le remplissage total d'au moins cette fente (19) entre les tourillons d'assemblage (12) et les bords de l'ouverture de réception (13) une masse de remplissage (14) solidifiable qui est solidifiée pour relier les composants en forme de plaque (3, 6) ajustés les uns par rapport aux autres conformément aux prescriptions,
**et en ce qu'**au moins une partie des tourillons d'assemblage (12) du premier composant en forme de plaque (6) et/ou les ouvertures de réception coordonnées (13) du second composant en forme de plaque (3) présentent un contour à contre-dépouille d'un côté ou des deux côtés par rapport à un sens d'insertion (Z) des tourillons d'assemblage (12), qui provoque une liaison active avec la masse de remplissage solidifiée (14) entre le tourillon d'assemblage (12) respectif et les bords de l'ouverture de réception (13) coordonnée au moins dans une direction opposée au sens d'insertion (Z).

15. Structure porteuse de véhicule selon la revendication 14, **caractérisée en ce qu'elle** est exécutée en tant que structure de carrosserie porteuse (1,2,3,4,6) et comporte des parois latérales qui sont respectivement formées par un composant en forme de plaque unique continu.

16. Véhicule présentant une structure porteuse selon la revendication 14 ou une structure de carrosserie porteuse (1,2,3,4,6) selon la revendication 15, **caractérisé en ce qu'**il est exécuté en tant que véhicule à moteur qui est sélectionné dans le groupe qui est formé par les véhicules routiers, les bateaux et les aéronefs.

17. Véhicule selon la revendication 16, **caractérisé en ce qu'**il s'agit d'un véhicule électrique et **en ce qu'**il comprend une enveloppe protectrice rigide (9) destinée à au moins un réservoir d'énergie, cette enveloppe protectrice (9) étant formée à partir de panneaux sandwich (11) reliés par des assemblages à tourillon (5) et étant exécutée de préférence en tant que compartiment pour batterie (9) thermiquement isolant et totalement fermé en fonctionnement.

18. Véhicule selon la revendication 16 ou 17, **caractérisé en ce qu'**il s'agit d'un véhicule électrique et **en ce qu'**il présente au moins une structure anticollision (22) qui est formée de panneaux sandwich (11) ayant des couches de recouvrement (7) faites d'un alliage métallique ductile et d'un matériau d'âme (8) résistant aux coups.
